# EUROPEAN PATENT SPECIFICATION

(11) **EP 2 669 843 B1**
(45) Date of publication and mention of the grant of the patent: **04.04.2018**
(21) Application number: 13161320.0
(22) Date of filing: 27.03.2013
(51) Int. Cl.: G06K 9/00, G06K 9/20

(54) **Imaging device and electronic apparatus**
Abbildungsvorrichtung und elektronisches Gerät
Dispositif d'imagerie et appareil électronique

(30) Priority: 29.05.2012 JP 2012122408
(43) Date of publication of application: 04.12.2013
(73) Proprietor: FUJITSU LIMITED, Kawasaki-shi, Kanagawa 211-8588 (JP)
(72) Inventor: Hirai, Yukio, Kawasaki, Kanagawa 211-8588 (JP); Yoshikawa, Hiroyasu, Kawasaki, Kanagawa 211-8588 (JP); Kamimura, Takuya, Kawasaki, Kanagawa 211-8588 (JP); Kanto, Nobuyuki, Kawasaki, Kanagawa 211-8588 (JP)
(74) Representative: Ward, James Norman

(56) References cited:
- EP-A1- 1 830 307
- EP-A2- 1 341 119
- EP-A2- 1 376 447
- JP-A- 2001 297 612
- US-A1- 2004 201 987

## Description

### FIELD

The embodiments discussed herein are related to an imaging device and an electronic apparatus. The embodiments discussed herein are also related to a part or component of an illuminating optical system that may be used in the imaging device.

### BACKGROUND

An imaging device that illuminates a target object with uniform light and picks up an image in a predetermined range of the target object may be utilized in various fields. In an image processing system that subjects the picked up image from the imaging device to an image processing, the image received from the imaging device may preferably be sharp.

Due to recent developments in biometric technologies, various types of authentication apparatuses may perform authentication of individuals by recognizing biometric features of images picked up by imaging a fingerprint of hand or foot, retina of eye, face, blood vessels, and the like, for example. A relatively large amount of personal feature data may be obtained particularly from the palm or back of the hand, the blood vessel of the finger, and the palmprint or palmar pattern, and such biometric information may be suited for improving the reliability of the personal authentication. In addition, patterns of blood vessels (or veins) may also be suited for the personal authentication.

When performing the biometric authentication, it may be preferable to pick up the image of the target object, that is, a part of the human body, without making contact with the target object (so-called contactless imaging). For this reason, the imaging device may emit light having a uniform illumination intensity in an imaging range, receive reflected light from the imaging range, and output an image signal of the picked up image. The imaging range may be defined by a distance between the imaging device and the target object, and an imaging area of the target object picked up by the imaging device.

In the imaging device that picks up the image of the target object by illuminating the target object with light, the so-called shining may occur due to specular reflection. When the reflected light of the mirror reflection at the surface of the target object is received by the imaging device such as a CMOS (Complementary Metal Oxide Semiconductor) imaging device, a specular reflection component may become greater than a signal component used for the authentication, and accurate reading of the signal component used for the authentication may be difficult. For example, when the target object is the blood vessel of the individual, the signal component used for the authentication may be a vein signal component. For this reason, it may be preferable to improve the reliability of the personal authentication by reducing the effects of the specular reflection at the surface of the target object.

As one method of reducing the effects of specular reflection, Japanese Laid-Open Patent Publication No. 2007-233282 proposes a method that uses a polarizing plate. This proposed method provides the polarizing plate, that transmits polarized light of only one direction, on an emitting surface side of an LED (Light Emitting Diode), in order to illuminate the target object with only a component of linearly polarized light. The specular reflection component from the surface of the target object maintains its polarization direction and is reflected. By providing a polarizing plate, that transmits only a component in a direction perpendicular to the original polarization, on an incident plane side of the imaging device, the effects of the specular reflection component from the surface of the target object may be reduced.

However, when the polarizing plate is provided, transmittance becomes 1/2 or less in both an outward path from the emitting surface of the LED to the target object and a return path from the target object to the incident plane of the imaging device. As a result, the transmittance as a whole may become 1/4 or less, to thereby considerably deteriorate the utilization efficiency of light. In addition, because the polarizing plate is provided on both the emitting surface side of the LED and the incident plane side of the imaging device, the number of parts increases, and the cost of the entire biometric information reading device may increase.

On the other hand, particularly when the imaging device is to be mounted on a portable electronic apparatus, such as a laptop computer and the like, there are demands to reduce the size of the imaging device. However, when the size of the imaging device is reduced, characteristics of the illuminating optical system may become closer to those of a point light source, and the effects of the specular reflection may increase.

Prior art patent publications known to the applicant include Japanese Laid-Open Patent Publications No. 2007-233282, No. 2007-235863, No. 2002-159901, and No. 2001-44515. Publication EP1341119 relates to an eye position display housed in an iris recognition system and a method thereof. Particularly, the iris recognition system comprises: a board (PCB) including a controller for controlling emission of light; a light emitter with a LED mounted on the PCB for emitting a light and uniformly scattering and equalizing the intensity of the emitted light; a lens unit for maintaining a focal length of the emitted light from the light emitter, refracting and converging the light at a constant angle, and passing the light through a predetermined portion only so as to display a position where a user's eye should be; and a reflector unit for reflecting every wavelength band that passed through the lens unit except for a wavelength of a predetermined light. **Prior art non-**patent publications known to the applicant include "http:// www.nihon-etching.co.jp/shibo/html" and "http://www.colorants-retail.com/jushi/jushi- 008/391.html".

According to the conventional imaging device, it may be difficult to reduce the effects of the specular reflection from the surface of the target object using a relatively compact configuration.

### SUMMARY

Accordingly, it is an object in one aspect of the present invention to provide an imaging device and an electronic apparatus, which may to reduce the effects of specular reflection from a surface of a target object using a relatively compact configuration.

According to one aspect of the present invention, an imaging device may
include a plurality of light sources (13), an illuminating optical system (17) comprising a light guide (15, 16, 172) configured to reflect and diffuse light from the plurality of light sources (13) received by a first surface, and an imaging optical system (14) that is arranged on an inner side of the illuminating optical system and that is configured to receive light reflected from the target object and to pick up an image corresponding to at least a part of the target object; the imaging device being configured such that light reflected from the target object enters a space on an inner side of the illuminating optical system (17); wherein the illuminating optical system (17) comprises a first illuminating optical element (15) forming the first surface, and a second illuminating optical element (16) provided on the first illuminating optical element (15) and forming a second surface (16-1) ; and wherein a first diffusing surface (120) is provided at the first illuminating optical element (15), characterized in that:the first surface has a groove (15-1 15-2 15-20) under which the plurality of light sources (13) are arranged;
the first diffusing surface (120) is provided between the first
illuminating optical element (15) and the second illuminating optical
element (16); the second surface has a concave shape (16-1C 16-1D) that is curved inwards toward the first surface (16-1); and a second diffusing surface (120) is provided on the second surface .

According to another aspect of the present invention, an electronic apparatus may include a main body that accommodates a processor, wherein the main body includes the imaging device described above.

The object and advantages of the invention will be realized and attained by means of the elements and combinations particularly pointed out in the claims.

It is to be understood that both the foregoing general description and the following detailed description are exemplary and explanatory and are not restrictive of the invention, as claimed.

### BRIEF DESCRIPTION OF DRAWINGS

FIG. 1 is a disassembled perspective view illustrating an example of an imaging device in a first embodiment of the present invention;
FIGs. 2A, 2B, and 2C are diagrams illustrating an illuminating optical system of the imaging device;
FIGs. 3A and 3B are diagrams for explaining a simple analysis model;
FIGs. 4A, 4B, and 4C are diagrams illustrating examples of analysis results using the analysis model of FIG. 3;
FIGs. 5A and 5B are diagrams for explaining analysis results of effects of specular reflection with respect to a diameter of a surface light source, when an LED itself is used as the surface light source;
FIGs. 6A, 6B, 6C, 6D, and 6E are diagrams for explaining analysis results of the effects of the specular reflection with respect to the diameter of the surface light source, when the LED itself is used as the surface light source;
FIGs. 7A and 7B are diagrams for explaining a dependence of each of a ratio of a signal component and a reflection component, and an illumination intensity distribution of the LED surface light source in an outward path of light from the LED surface light source to a target object, with respect to a distance between the LED surface light source and the target object;
FIGs. 8A, 8B, 8C, and 8D are diagrams for explaining the dependence of each of the ratio of the signal component and the reflection component, and the illumination intensity distribution of the LED surface light source in the outward path of light from the LED surface light source to the target object, with respect to a distance between the LED surface light source and the target object;
FIGs. 9A, 9B, 9C, and 9D are cross sectional views illustrating various shapes of an emitting surface of the illuminating optical system;
FIG. 10 is a diagram illustrating the illumination intensity in the outward path of light to the target object at each X-direction position on the target object, for a comparison example not provided with the illuminating optical system, and examples in which a radius R of a convex shape of the emitting surface is 2 mm and 4 mm;
FIG. 11 is a diagram illustrating the illumination intensity in the outward path of light to the target object at each X-direction position on the target object, for the comparison example not provided with the illuminating optical system, an example in which the emitting surface is flat, and examples in which a radius R of a concave shape of the emitting surface is 4 mm, 3 mm, and 2 mm;
FIG. 12 is a diagram illustrating the illumination intensity in the outward path of light to the target object at each X-direction position on the target object, for the comparison example not provided with the illuminating optical system, the example in which the radius R of the concave shape of the emitting surface is 3 mm, and examples in which the radius R of the concave shape of the emitting surface is 3 mm and the concave shape is provided with a slope;
FIGs. 13A and 13B are diagrams illustrating the illumination intensity in the outward path of light to the target object at each X-direction position on the target object, for comparison examples having the emitting surface that is a sloping surface;
FIGs. 14A and 14B are diagrams for explaining analysis results of effects of specular reflection with respect to the comparison example not provided with the illuminating optical system, and the example in which the radius R of the concave shape of the emitting surface is 3 mm and the concave shape is provided with the slope;
FIG. 15 is a diagram illustrating the ratio between the signal component and the reflection component with respect to the diameter of the LED surface light source, for the comparison example not provided with the illuminating optical system;
FIGs. 16A and 16B are diagrams for explaining a dependence of the illumination intensity distribution in the outward path of light from the illuminating optical system to the target object, with respect to the radius of the emitting surface having the concave shape;
FIGs. 17A and 17B are diagrams for explaining a dependence of the illumination intensity distribution in the outward path of light from the illuminating optical system to the target object, with respect to an inclination of the emitting surface having the concave shape;
FIGs. 18A and 18B are diagrams for explaining a dependence of the illumination intensity distribution in the outward path of light from the illuminating optical system to the target object, with respect to a groove in an illuminating optical element;
FIGs. 19A and 19B are diagrams for explaining a dependence of the illumination intensity distribution in the outward path of light from the illuminating optical system to the target object, with respect to the groove in the illuminating optical element;
FIGs. 20A and 20B are cross sectional views illustrating examples of the illuminating optical system of the imaging device in a second embodiment of the present invention;
FIGs. 21A, 21B, and 21C are diagrams for explaining analysis results of the effects of the specular reflection with respect to a comparison example C1 and examples E1, E2, and E3;
FIG. 22 is a diagram illustrating ratio of the signal component and the reflection component in the comparison example C1 and the examples E1, E2, and E3;
FIGs. 23A, 23B, and 23C are plan views illustrating parts of the imaging device in a third embodiment of the present invention;
FIG. 24 is a diagram illustrating an example of an electronic apparatus;
FIG. 25 is a cross sectional view illustrating an example of the illuminating optical system of the imaging device in a fourth embodiment of the present invention;
FIG. 26 is a cross sectional view illustrating an example of the illuminating optical system of the imaging device in a fifth embodiment of the present invention;
FIGs. 27A, 27B, and 27C are cross sectional views illustrating illuminating optical systems having grooves with different depths;
FIG. 28 is a diagram illustrating the illumination intensity of the illuminating optical systems of FIGs. 27A, 27B, and 27C in the outward path of light to the target object at each X-direction position on the target object;
FIGs. 29A, 29B, and 29C are cross sectional views illustrating illuminating optical systems having grooves with different curvatures;
FIG. 30 is a diagram illustrating the illumination intensity of the illuminating optical systems of FIGs. 29A, 29B, and 29C in the outward path of light to the target object at each X-direction position on the target object;
FIG. 31 is a diagram illustrating the illumination intensity of the illuminating optical systems of FIGs. 29A, 29B, and 29C in the outward path of light to the target object at each X-direction position on the target object;
FIG. 32 is a cross sectional view illustrating an illuminating optical system having a groove formed by an arcuate top edge and a side edge with a radius of curvature that is almost infinitely large;
FIG. 33 is a diagram for explaining a shape of the groove of FIG. 32;
FIGs. 34A and 34B are diagrams for explaining analysis results of the outward path illumination intensity distribution with respect to the illuminating optical systems of the fourth and fifth embodiments for a case in which the distance to the target object is near;
FIG. 35 is a diagram illustrating the illumination intensity of the illuminating optical system in the outward path of light to the target object at each X-direction position on the target object, in the fourth and fifth embodiments for the case in which the distance to the target object is near;
FIGs. 36A and 36B are diagrams for explaining analysis results of the outward path illumination intensity distribution with respect to the illuminating optical systems of the fourth and fifth embodiments for a case in which the distance to the target object is far;
FIG. 37 is a diagram illustrating the illumination intensity of the illuminating optical system in the outward path of light to the target object at each X-direction position on the target object, in the fourth and fifth embodiments for the case in which the distance to the target object is far;
FIGs. 38A and 38B are cross sectional views illustrating examples of the illuminating optical system in the fifth embodiment and a first modification thereof;
FIG. 39 is a diagram illustrating the illumination intensity of the illuminating optical system in the outward path of light to the target object at each X-direction position on the target object, in the fifth embodiment and the first modification thereof;
FIGs. 40A and 40B are cross sectional views illustrating examples of the illuminating optical system in the fifth embodiment and a second modification thereof;
FIG. 41 is a diagram illustrating the illumination intensity of the illuminating optical system in the outward path of light to the target object at each X-direction position on the target object, in the fifth embodiment and the second modification thereof;
FIG. 42 is a cross sectional view illustrating an example of the illuminating optical system of the imaging device in a sixth embodiment of the present invention;
FIG. 43 is a plan view illustrating an example of the illuminating optical system of the imaging device in a seventh embodiment of the present invention;
FIGs. 44A and 44B are cross sectional views illustrating a part of the illuminating optical system in the seventh embodiment on an enlarged scale;
FIG. 45 is a plan view illustrating an example of the illuminating optical system of the imaging device in an eighth embodiment of the present invention;
FIGs. 46A and 46B are cross sectional views illustrating a part of the illuminating optical system in the eighth embodiment on an enlarged scale;
FIGs. 47A and 47B are cross sectional views illustrating a part of the illuminating optical system in a ninth embodiment on an enlarged scale;
FIG. 48 is a plan view illustrating an example of the illuminating optical system of the imaging device in a tenth embodiment of the present invention;
FIGs. 49A and 49B are cross sectional views illustrating a part of the illuminating optical system in the tenth embodiment on an enlarged scale; and
FIG. 50 is a cross sectional view illustrating an example of the illuminating optical system of the imaging device in an eleventh embodiment of the present invention.

### DESCRIPTION OF EMBODIMENTS

Preferred embodiments of the present invention will be described with reference to the accompanying drawings.

According to one embodiment of the present invention, an imaging device and an electronic apparatus may include an illuminating optical system that forms a light guide, and an imaging optical system that is arranged on an inner side of the illuminating optical system. Light from a plurality of light sources received by a first surface is reflected and diffused (or scattered), and light from a second surface opposite to the first surface illuminates a target object. The illuminating optical system receives reflected light from the target object, and an image corresponding to at least a part of the target object is imaged on an imaging element. The second surface of the illuminating optical system may have a concave shape. A part or component of the illuminating optical system may correspond to the illuminating optical system.

A description will now be given of the imaging device and the electronic apparatus in each embodiment according to the present invention.

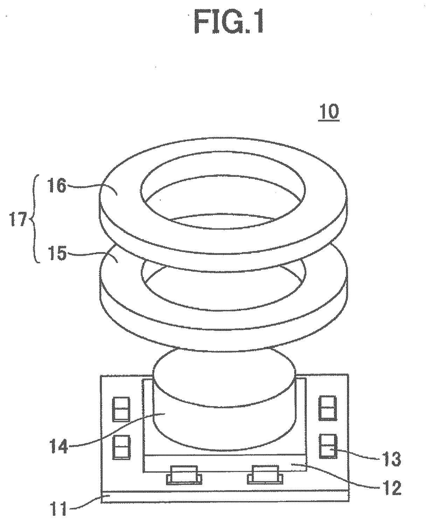

FIG. 1 is a disassembled perspective view illustrating an example of the imaging device in a first embodiment of the present invention. An imaging device 10 illustrated in FIG. 1 may include a wiring board 11, an imaging system board 12 provided on the wiring board 11, a plurality of LEDs (Light Emitting Diodes) 13 provided on the wiring board 11, an imaging optical system 14 provided on the imaging system board 12, and illuminating optical elements 15 and 16 arranged to surround a periphery of the imaging optical system 14. The plurality of LEDs 13 may form an example of a light source. The illuminating optical elements 15 and 16 may form an example of an illuminating optical system 17, or a part or component of the illuminating optical system 17.

Each LED 13 may emit light having a wavelength in a visible light region, a wavelength in a near-infrared light region, a wavelength in an ultraviolet light region, and the like. In the example illustrated in FIG. 1, eight LEDs 13 are arranged in the periphery of the imaging system board 12 (or the imaging optical system 14). However, the number of LEDs 13 is no limited to eight, and a number of LEDs 13 suited for uniformly illuminating the target object may be provided.

The imaging optical system 14 may have a known configuration including an imaging element provided on the imaging system board 12, and an imaging system lens. The imaging system lens may receive the reflected light from the target object, and an image corresponding to at least a part of the target object may be imaged on the imaging element. The imaging element may be formed by a CMOS (Complementary Metal Oxide Semiconductor) sensor, a CCD (Charge Coupled Device) sensor, and the like. An output image signal (or biometric information read signal) related to the target object that is picked up by the imaging element may be supplied to an imaging processing unit within the electronic apparatus (not illustrated), for example. Functions of the image processing unit may be realized by a CPU (Central Processing Unit) within the electronic apparatus.

The illuminating optical elements 15 and 16 may be formed by a material having a light transmitting characteristic, and form a light guide that enlarges a surface via which the light from the LEDs 13 illuminates the target object. As will be described later, a groove in which the LEDs 13 may be arranged are provided on a side of the illuminating optical element 15 closer to the imaging system board 12. At least a part of the LEDs 13 may be accommodated within the groove in the illuminating optical element 15. For example, the material having the light transmitting characteristic may include acrylic resins such as PMMA (Polymethyl Methacrylate) and the like, various resins (or organic glass) including polycarbonate, and glass such as BK7 and the like. Accordingly, the illuminating optical elements 15 and 16 may form an illuminating optical system that reflects and diffuses (or scatters) the light from the LEDs 13 and illuminates the target object. For example, when the target object is a finger of a user, biometric information that is a read target may be fingerprint information. In addition, when the target object is a palm of the user, the biometric information that is the read target may be vein information.

In the example illustrated in FIG. 1, the imaging optical system 14 has a circular cylinder shape, and the illuminating optical elements 15 and 16 have a ring shape.

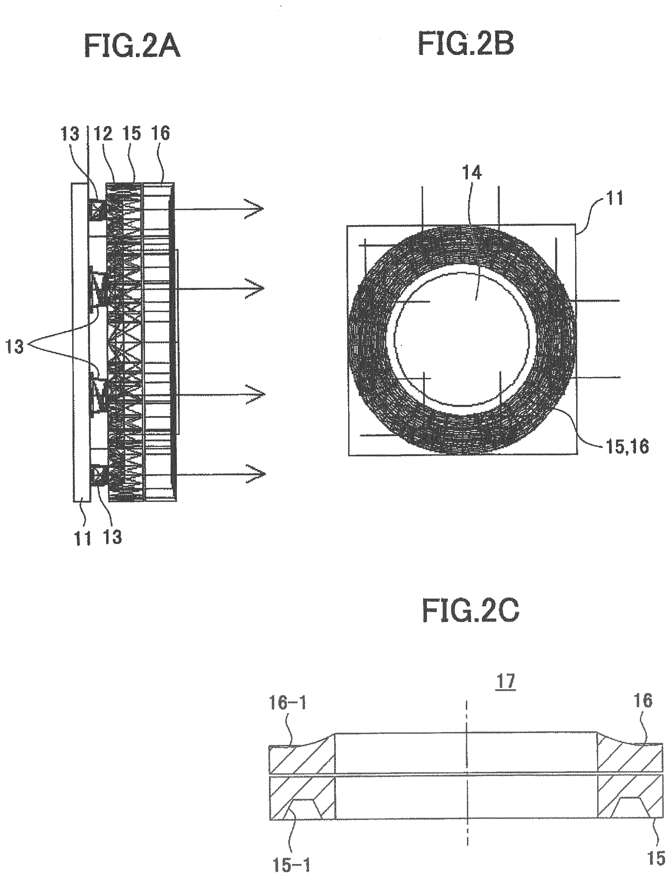

FIGs. 2A, 2B, and 2C are diagrams illustrating the illuminating optical system of the imaging device. FIGs. 2A and 2B are perspective views viewed from a side and a top, respectively, to illustrate the reflection and the diffusing (or scattering) of the light from the LEDs 13, and light emitted from the illuminating optical element 16 is indicated by arrows. In addition, FIG. 2C is a cross sectional view of the illuminating optical elements 15 and 16 in a state cut along a plane that passes a center of the ring shape and is perpendicular to a top surface of the wiring board 11 (or imaging system board 12). As illustrated in FIG. 2C, a top surface (that is, the side opposite from the imaging system board 12) of the illuminating optical element 15 is flat, and a bottom surface (that is, on the side of the imaging system board 12) of the illuminating optical element 15 includes a ring-shaped groove 15-1 to accommodate at least a part of the LEDs 13. On the other hand, a top surface (that is, an emitting surface opposite from the illuminating optical element 15) of the illuminating optical element 16 has a concave shape, and a bottom surface (that is, the side of the illuminating optical element 15) of the illuminating optical element 16 is flat. In this example, the concave shape of the top surface of the illuminating optical element 16 is inclined outwards in a direction (hereinafter also referred to as a "downward direction") towards the illuminating optical element 15 (or the boards 11 and 12).

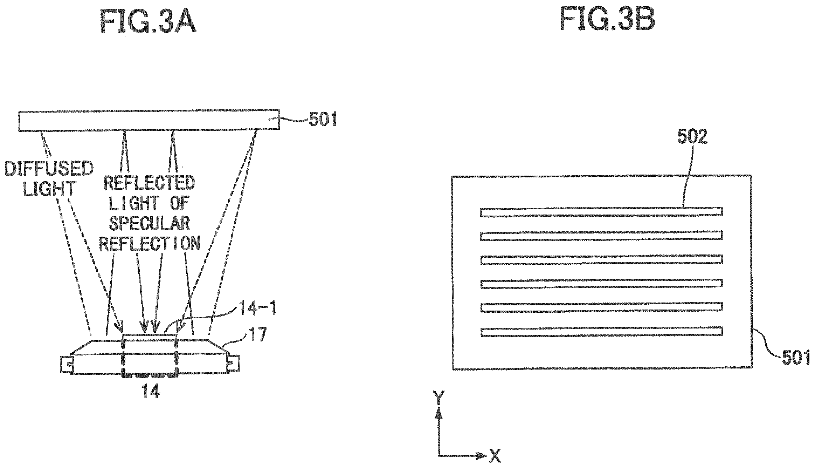

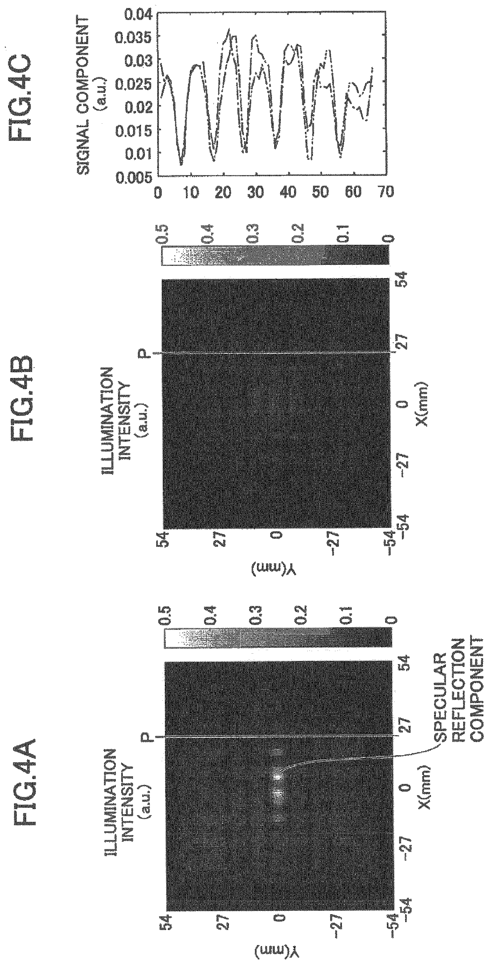

Next, a description will be given of the effects of specular reflection (so-called shining) at the surface of the target object, with respect to analysis results of a simple analysis model, by referring to FIGs. 3A through and 4C. FIGs. 3A and 3B are diagrams for explaining the simple analysis model, and FIGs. 4A, 4B, and 4C are diagrams illustrating examples of analysis results using the analysis model of FIG. 3.

FIG. 3A is a side view illustrating the analysis model, and FIG. 3B is a plan view illustrating an example of a target object 501. FIGs. 4A through 4C are simulation results that extract only light passing through an entrance pupil 14-1 of the imaging optical system 14, amongst the light from the illuminating optical system 17 illustrated in FIG. 3A that illuminates the target object 501 and is reflected at the surface of the target object 501 (that is, amongst a specular component and a diffusing component at the surface of the target object 501). For the sake of convenience, FIG. 3A illustrates the entrance pupil 14-1 in a state slightly projecting from the emitting surface (or top surface) of the illuminating optical system 17 in order to make the entrance pupil 14-1 is visible, however, the entrance pupil 14-1 may of course be arranged on the same plane as the illuminating optical system 14, or arranged approximately on the same plane as the illuminating optical system 14. In this example, a plurality of stripe-shaped light absorbing parts 502 illustrated in FIG. 3B are provided on a far-end surface (that is, the surface of the target object 501 farther away from the illuminating optical system 17 in FIG. 3A) to extend parallel to each other in a horizontal direction (that is, X-direction), and a component of the light absorbing parts 502 is defined as a signal component.

FIGs. 4A and 4B illustrate the analysis results for cases in which an area of a light emitting surface of one LED 13 in the plan view is ø2 mm and ø50 mm, respectively. FIG. 4C illustrates the signal component corresponding to the light absorbing parts 502 of the target object 501 obtained from the analysis results for the cases illustrated in FIGs. 4A and 4B. In FIGs. 4A and 4B, the ordinate indicates a position on the target object 501 illustrated in FIG. 3B along a Y-direction in mm, the abscissa indicates a position on the target object 501 along the X-direction in mm, and dark parallel stripes extending in the horizontal direction correspond to the signal component described above. In FIGs. 4A and 4B, a tone scale on the right side represent an illumination intensity in arbitrary units (a.u.), where white indicates 0.5 (a.u.), light gray indicates approximately 0.3 (a.u.), dark gray indicates approximately 0.25 (a.u.), and black indicates 0 (a.u.). In addition, a position where X = 0 mm and Y = 0 mm corresponds to a center position of the entrance pupil 14-1, for example, and the above designation are also used in similar figures that follow. FIG. 4C illustrates the signal component at X = P mm (for example, P = +25 mm) along the Y-direction by a one-dot chain line for the case illustrated in FIG. 4A and by a two-dot chain line for the case illustrated in FIG. 4B. In FIG. 4C, the ordinate indicates a distance (mm) in the -Y-direction for a case in which ø = +54 mm is taken as the origin, and the abscissa indicates the signal component in arbitrary units (a.u.). In this example, two peaks (illustrated by white portions in FIG. 4A for the sake of convenience) where the light is concentrated exist at a central region. Such a peak where the light is concentrated represents the illumination intensity corresponding to the specular reflection component (or noise component), in arbitrary units (a.u.). In the tone scale on the right side of each of FIGs. 4A and 4B, the illumination intensity of the specular reflection component takes a value from 0 (black) at the lower end to 0.5 (white) at the upper end, and the component that is closer to white is closer to 0.5 and indicates that the specular reflection component is larger. By comparing a ratio of the noise component represented by the peak and the signal component under various conditions, the effects of the specular reflection under the various conditions may be analyzed. From the analysis results illustrated in FIGs. 4A through 4C, it may be confirmed that the effects of the specular reflection are reduced as the surface light source becomes larger.

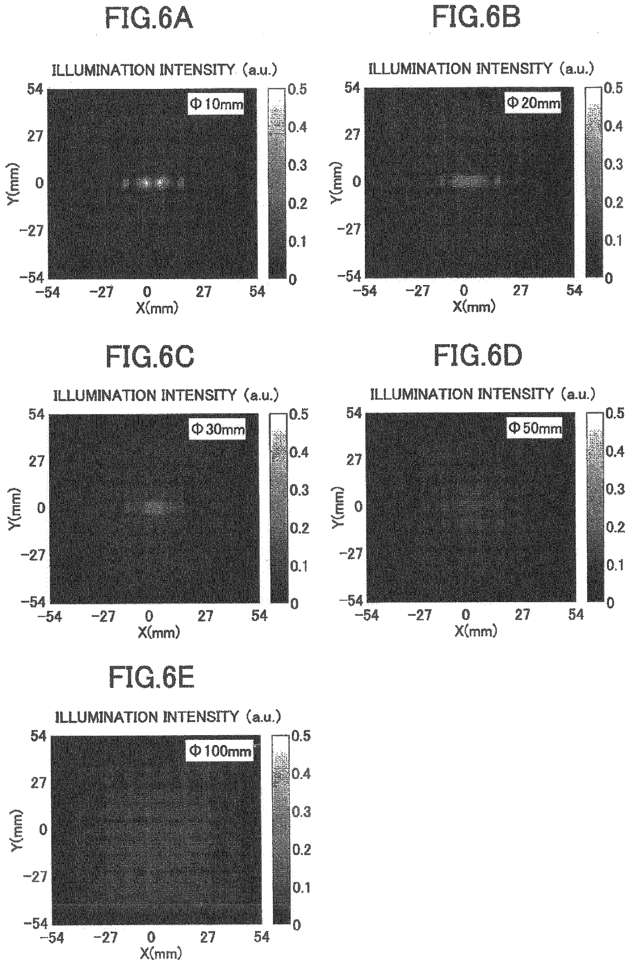

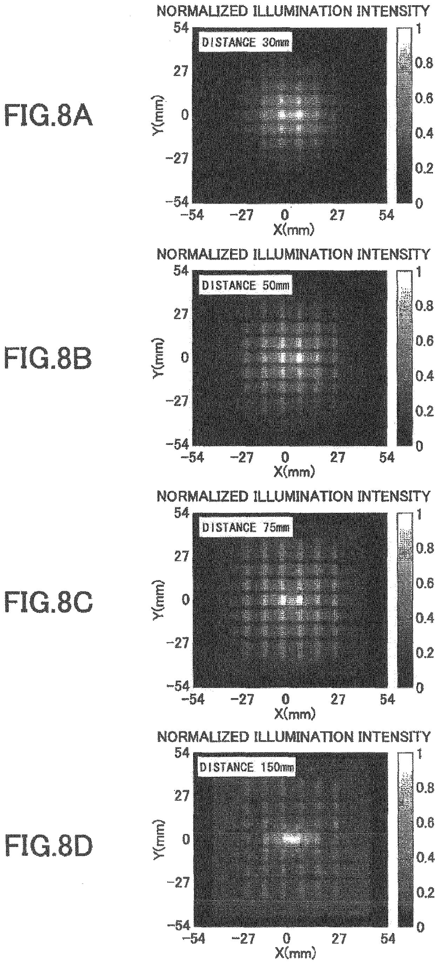

Scales similar to the tone scale on the right side of FIGs. 4A and 4B are also used in FIGs. 6A through 6E, FIGs. 8A through 8D, FIGs. 14A and 14B, FIGs. 21A through 21C, FIGs. 34A and 34B, and FIGs. 36A and 36B which will be described later. However, in FIGs. 8A through 8D, the scale indicates a normalized illumination intensity, as will be described later.

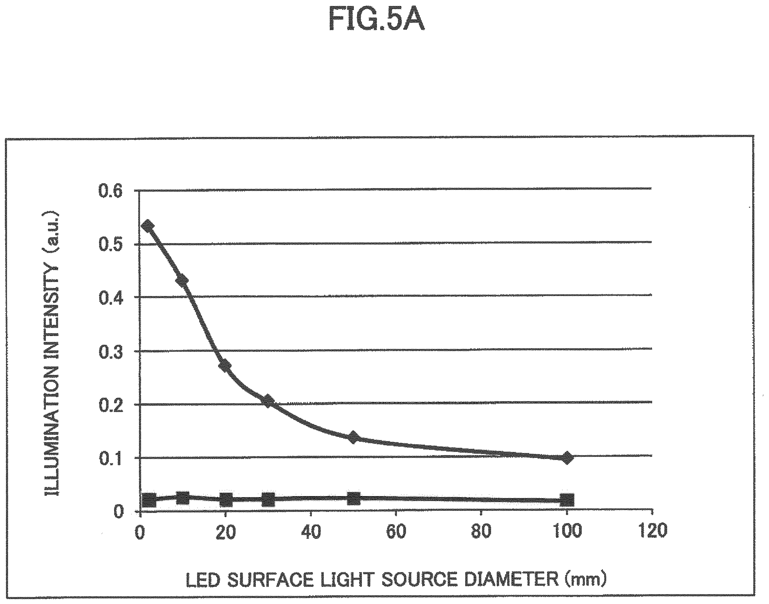

Next, a description will be given of an illumination intensity distribution in an outward path of light between the illuminating optical system and the target object, by referring to FIGs. 5A through 8D.

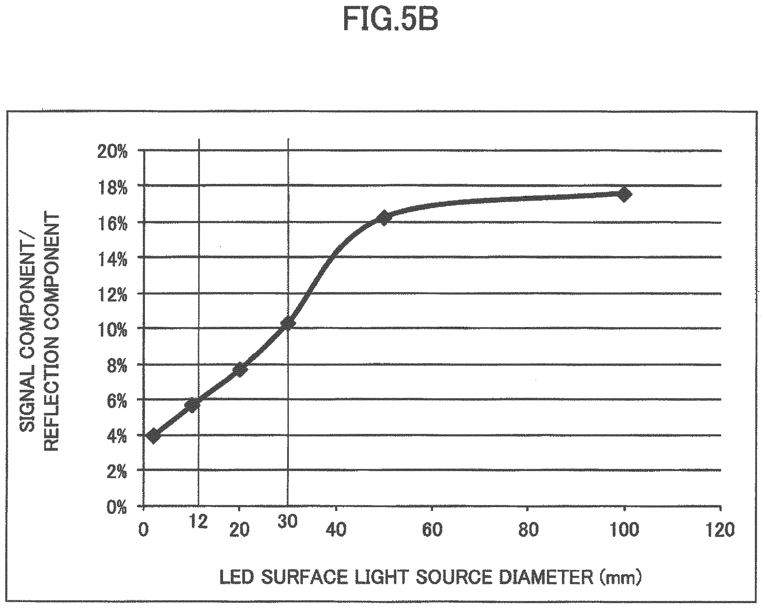

FIGs. 5A and 5B and FIGs. 6A, 6B, 6C, 6D, and 6E are diagrams for explaining analysis results of effects of specular reflection (or shining) with respect to a diameter of a surface light source, when the LED 13 itself is used as the surface light source (that is, when no illuminating optical system is provided). FIG. 5A illustrates a signal component and a reflection component with respect to a surface light source diameter (mm) of the LED 13, and FIG. 5B illustrates a ratio (%) of the signal component and the reflection component (that is, a ratio [signal component]/[reflection component]) with respect to the surface light source diameter (mm) of the LED 13. In FIG. 5A, square marks denote data of the signal component, and diamond-shaped marks denote data of the reflection component. As may be seen from FIGs. 5A and 5B, when an attempt is made to reduce the size of the imaging device 10 by reducing the diameter of the light emitting surface of the LED 13 (that is, the surface light source diameter) from ø30 mm to ø12 mm, for example, the reflection component increases with respect to the light emitting surface area of the LED (that is, the surface light source area) and the ratio [signal component]/[reflection component] relatively decreases. Hence, it may be confirmed that reducing the size of the imaging device 10 is difficult.

FIGs. 6A, 6B, 6C, 6D, and 6E illustrate the analysis results for cases in which the surface light source diameter of the LED 13 is ø10 mm, ø20 mm, ø30 mm, ø50 mm, and ø100 mm, respectively. In FIGs. 6A, 6B, 6C, 6D, and 6E, the ordinate indicates the position on the target object 501 along the Y-direction in mm, the abscissa indicates the position on the target object 501 along the X-direction in mm, and the dark parallel stripes extending in the horizontal direction correspond to the signal component described above. Further, in FIGs. 6A, 6B, 6C, 6D, and 6E, a peak (illustrated by a white portion) where the light is concentrated represents the illumination intensity corresponding to the specular reflection component (or noise component), in arbitrary units (a.u.). It may be confirmed from FIGs. 6A, 6B, 6C, 6D, and 6E that making the surface light source area of the LED 13 large in order to approximate surface emission is effective from the point of view of suppressing the reflection component.

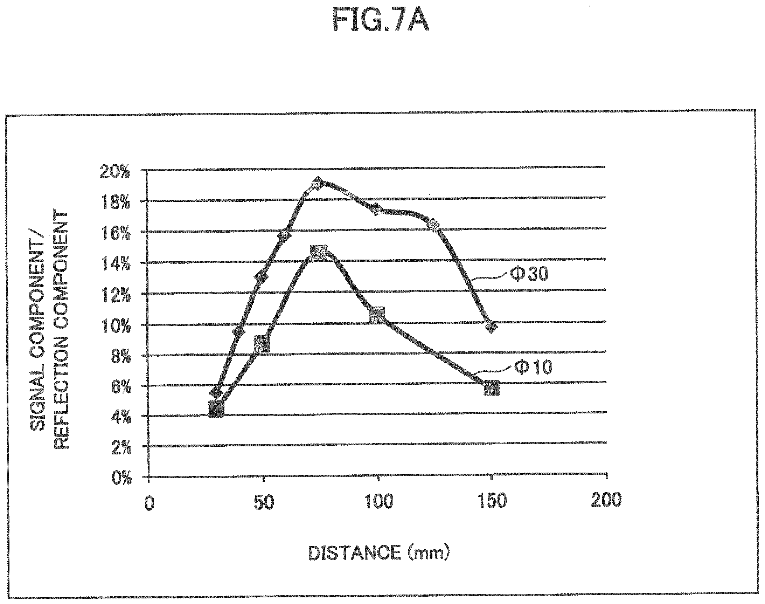

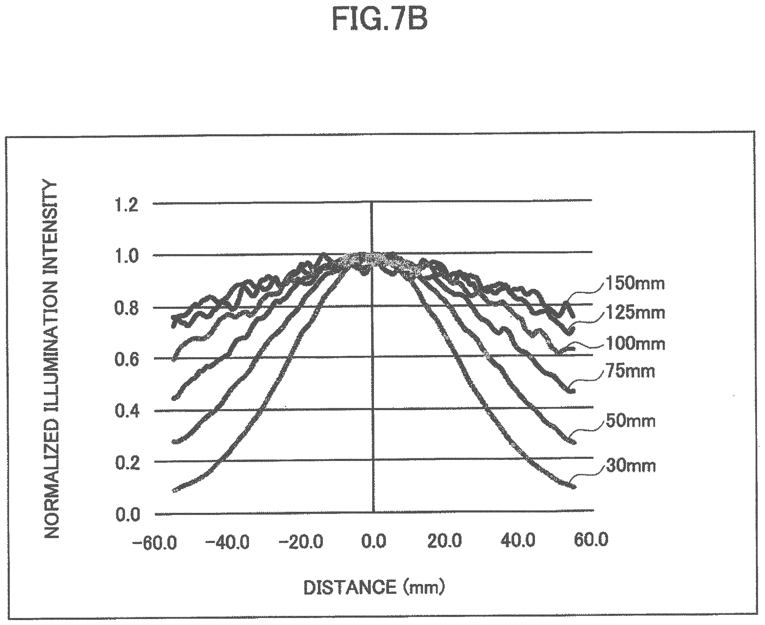

FIGs. 7A and 7B and FIGs. 8A, 8B, 8C, and 8D are diagrams for explaining a dependence of each of the ratio [signal component]/[reflection component], and the illumination intensity distribution of the surface light source of the LED 13 (hereinafter also referred to as the "LED surface light source") in the outward path of light from the LED surface light source to the target object, with respect to the distance between the LED surface light source and the target object.

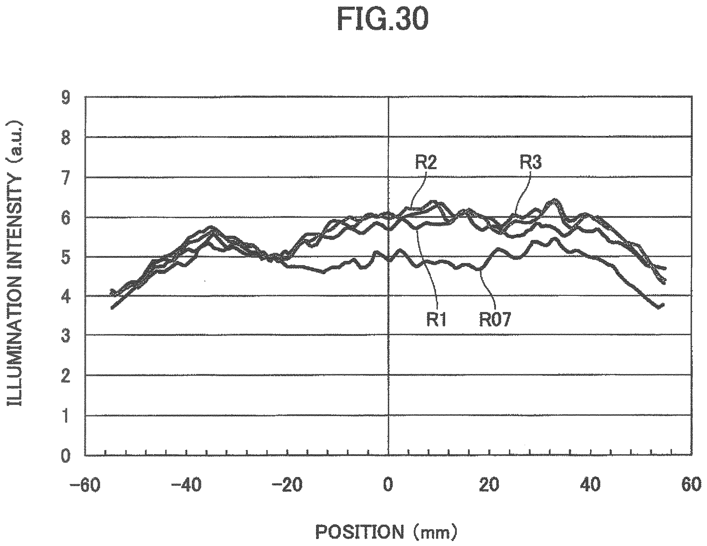

FIG. 7A illustrates the dependence of the ratio [signal component]/[reflection component] on the distance between the LED surface light source and the target object 501. FIG. 7B illustrates the dependence of a normalized component (hereinafter also referred to as a "normalized illumination intensity") of the illumination intensity in the outward path of light to the target object 501 for the X-direction component on the target object 501, on the distance between the LED surface light source and the target object 501. In FIG. 7A, diamond-shaped marks denote data for a case in which the surface emission diameter of the LED 13 is ø30 mm, and square marks denote data for a case in which the surface emission diameter of the LED 13 is ø10 mm. In addition, in FIG. 7B, 30 mm, 50 mm, 75 mm, 100 mm, 125 mm, and 150 mm respectively indicate the distance between the LED surface light source and the target object 501, and 0.0 on the abscissa corresponds to the center position of the entrance pupil 14-1 where X = 0 mm.

FIGs. 8A, 8B, 8C, and 8D illustrate the analysis results for cases in which the distance between the LED surface light source and the target object 501 is 30 mm, 50 mm, 75 mm, and 150 mm, respectively, when the surface emission diameter of the LED 13 is ø2 mm. In FIGs. 8A through 8D and the subsequent figures illustrating data, it is assumed that the data uses the data of a shape model and a light emission distribution model of the LED 13, unless the light emission diameter of the LED 13 is indicated otherwise. In FIGs. 8A through 8D, the ordinate indicates the Y-direction position on the target object 501 in mm, and the abscissa indicates the X-direction position on the target object 501 in mm, and dark parallel stripes extending in the horizontal direction correspond to the signal component described above. Moreover, in FIGs. 8A through 8D, peaks (illustrated by white portions) where the light is concentrated represent the normalized illumination intensity corresponding to the normalized specular reflection component (or normalized noise component), in arbitrary units (a.u.).

As may be seen from FIGs. 7A through 8D, as the distance from the LED surface light source to the target object 501 becomes shorter, the illumination intensity distribution in the return path of light from the target object 501 to the imaging optical system 14 widens, and the reflection component may be reduced. On the other hand, when the distance from the LED surface light source to the target object 501 becomes too short, the flatness of the illumination intensity distribution in the outward path of light from the LED 13 to the target object 501 deteriorates, and the reflection component may increase and deteriorate the ratio [signal component]/[reflection component]. Hence, it may be confirmed that the effects of the reflection (or specular reflection) also depends on the flatness of the illumination intensity distribution in the outward path of light from the LED 13 to the target object 501.

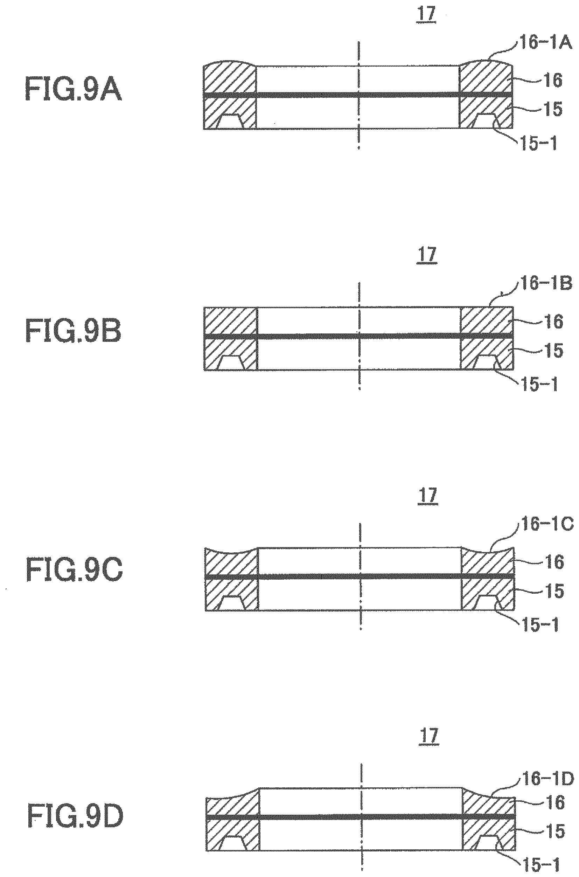

Next, a description will be given of the analysis results of a relationship between the shape of the top surface of the illuminating optical element 16 (that is, the emitting surface of the illuminating optical system 17) and the flatness of the illumination intensity distribution in the outward path of light from the illuminating optical system 17 to the target object 501. The illuminating optical system 17 illustrated in FIGs. 9A, 9B, 9C, and 9D is used for the analysis. FIGs. 9A, 9B, 9C, and 9D are cross sectional views illustrating various shapes of an emitting surface 16-1 of the illuminating optical system 17. FIG. 9A illustrates a convex-shaped emitting surface 16-1A, FIG. 9B illustrates a planar emitting surface 16-1B, FIG. 9C illustrates a concave-shaped emitting surface 16-1C, and FIG. 9D illustrates a concave-shaped emitting surface 16-1D sloping in the downward direction towards the outer side.

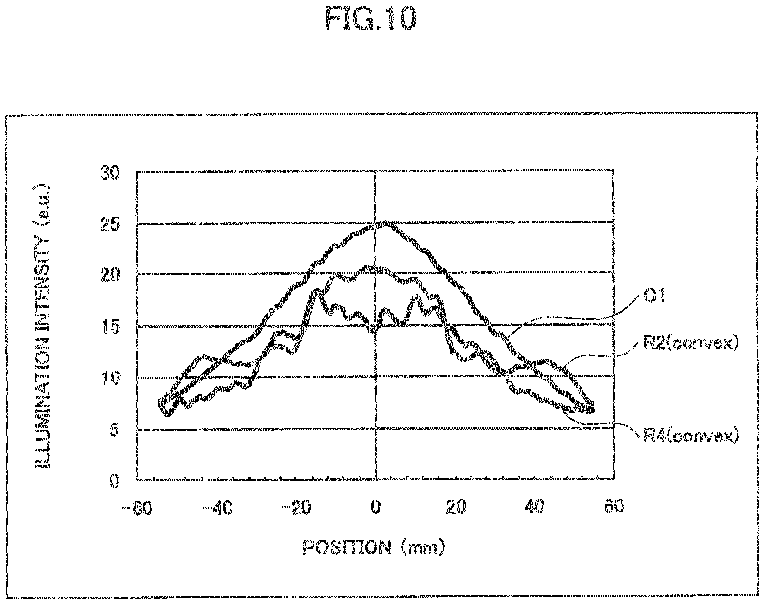

FIG. 10 is a diagram illustrating the illumination intensity (a.u.) in the outward path of light to the target object 501 at each X-direction position (mm) on the target object 501, for a comparison example C1 not provided with the illuminating optical system 17, and examples R2(convex) and R4(convex) in which a radius R of the convex shape of the emitting surface 16-1A in FIG. 9A is 2 mm and 4 mm, respectively.

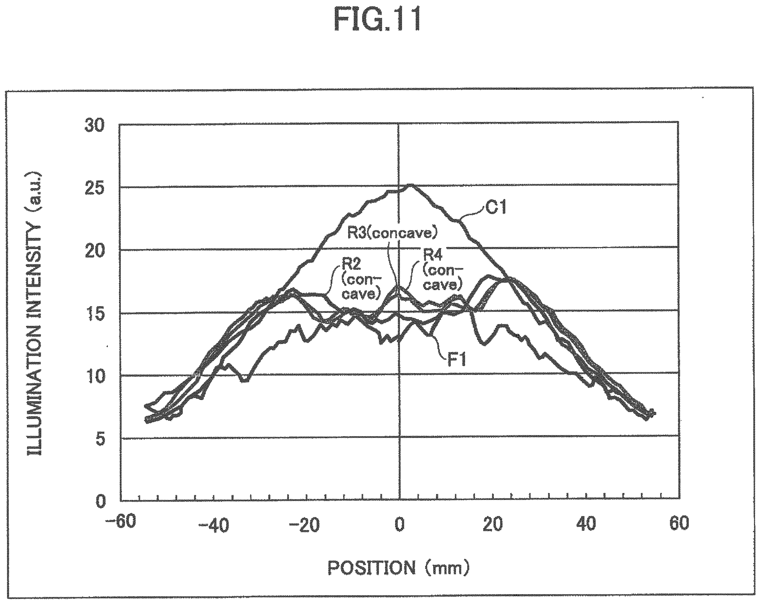

FIG. 11 is a diagram illustrating the illumination intensity (a.u.) in the outward path of light to the target object 501 at each X-direction position (mm) on the target object 501, for the comparison example C1 not provided with the illuminating optical system 17, an example F1 in which the emitting surface 16-1B in FIG. 9B is flat, and examples R4(concave), R3(concave), and R2(concave) in which a radius R of the concave shape of the emitting surface 16-1C in FIG. 9C is 4 mm, 3 mm, and 2 mm, respectively.

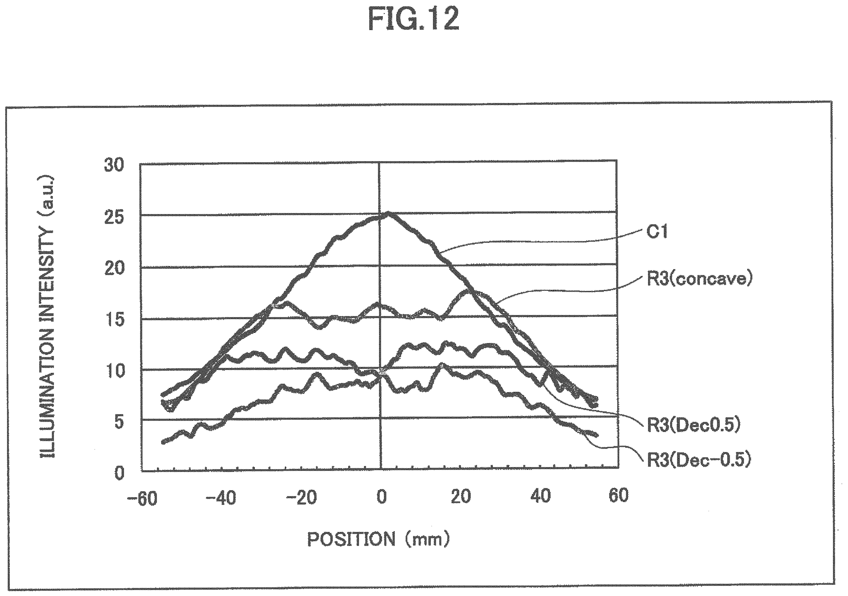

FIG. 12 is a diagram illustrating the illumination intensity (a.u.) in the outward path of light to the target object 501 at each X-direction position (mm) on the target object 501, for the comparison example C1 not provided with the illuminating optical system 17, the example R3(concave) in which the radius R of the concave shape of the emitting surface 16-1C in FIG. 9C is 3 mm, and examples R3(Dec0.5), R3(Dec-0.5) in which the radius R of the concave shape of the emitting surface 16-1D in FIG. 9D is 3 mm and the center position of the radius R is shifted (that is, decentered) in the X-direction on the right side by 0.5 mm and -0.5 mm, respectively, so that the concave shape is provided with a slope.

It may be confirmed from FIGs. 10 through 12 that the flatness of the illumination intensity distribution in the outward path of light is poor for the comparison example C1 and the examples R2(convex) and R4(convex) with the convex shape. In addition, it may be confirmed that the flatness of the illumination intensity distribution in the outward path of light is improved for the examples R2(concave), R3(concave), and R4(concave) with the concave shape when compared to the comparison example C1 and the examples R2(convex) and R4(convex) with the convex shape. Furthermore, it may be confirmed that the flatness of the illumination intensity distribution in the outward path of light is further improved in the examples R3(Dec0.5) and R3(Dec-0.5) having the concave shape with the slope, when compared to the example R3(concave) with the concave shape. It may be confirmed that the flatness of the illumination intensity distribution in the outward path of light is further improved particularly in the example R3(Dec0.5) having the concave shape sloping in the downward direction towards the outer side, even when compared to the example R3(-0.5) having the concave shape sloping in the upward direction towards the outer side. Accordingly, it may be confirmed that the flatness of the illumination intensity distribution in the outward path of light is particularly improved in the case of the emitting surface 16-1D having the concave shape sloping in the downward direction towards the outer side as illustrated in FIG. 9D.

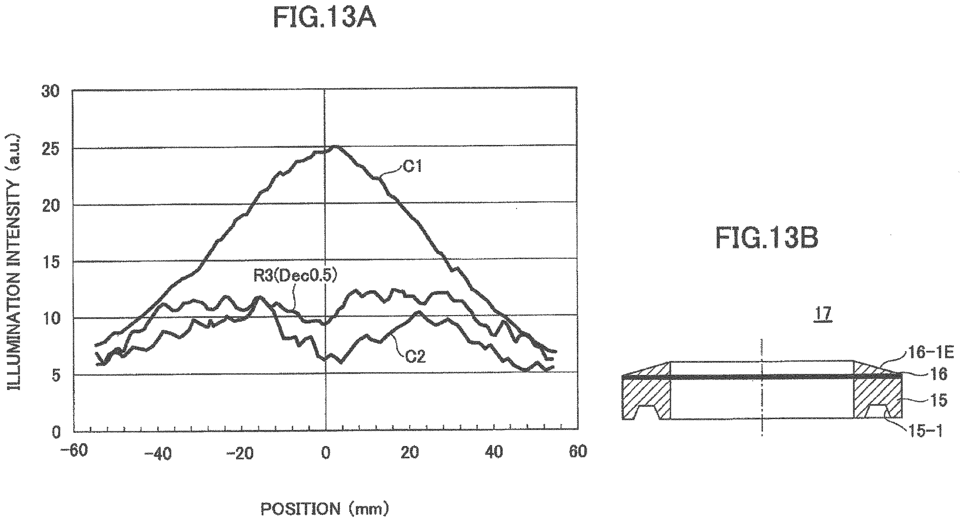

FIGs. 13A and 13B are diagrams illustrating the illumination intensity in the outward path of light to the target object at each X-direction position on the target object, for comparison examples having the emitting surface that is a sloping surface. FIG. 13A illustrates the illumination intensity (a.u.) of the outgoing path of light to the target object 501 at each X-direction position (mm) on the target object 501, for the comparison example C1 not provided with the illuminating optical system 17, a comparison example C2 in which an emitting surface 16-1E of the illuminating optical system 17 is a flat surface sloping in the downward direction as illustrated in FIG. 13B, and the example R3(Dec0.5) in which the radius R of the concave shape of the emitting surface 16-1D in FIG. 9D is 3 mm and the center position of the radius R is decentered in the X-direction by 0.5 mm on the right side so that the concave shape is provided with the slope. It may be confirmed from FIG. 13A that, in the case of the comparison example C2, the illumination intensity deteriorates by a relatively large amount at the part of the target object 501 opposing the central part of the illuminating optical system 17. Hence, it may be confirmed that the flatness of the illumination intensity distribution is not improved as in the case of the example R3(Dec0.5) by simply making the emitting surface 16-1E of the illuminating optical system 17 a flat sloping surface.

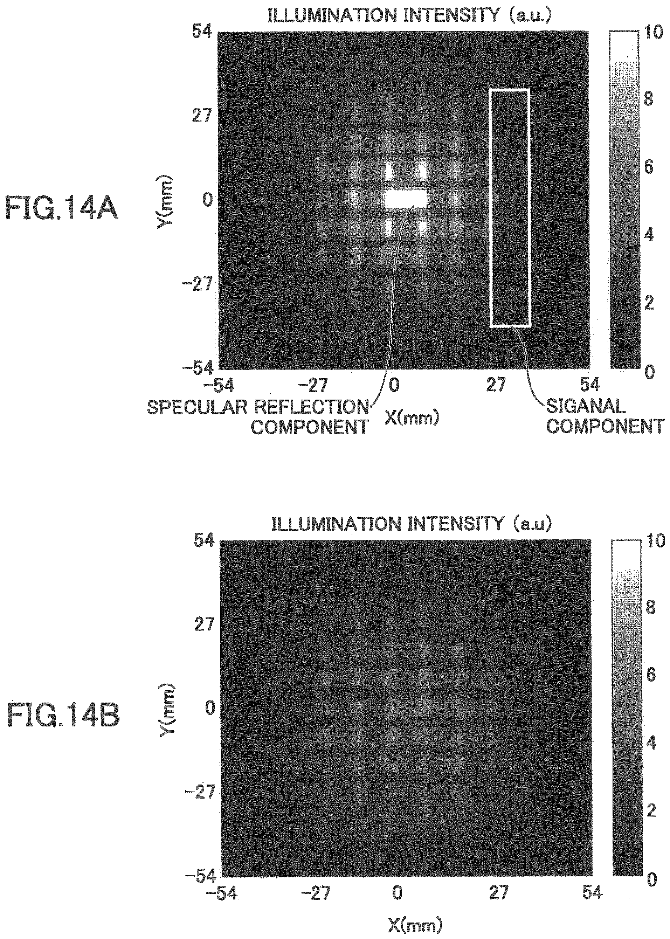

FIGs. 14A and 14B are diagrams for explaining analysis results of effects of specular reflection with respect to the comparison example C1 not provided with the illuminating optical system 17, and the example R(Dec0.5) in which the radius R of the concave shape of the emitting surface 16-1D in FIG. 9D is 3 mm and the concave shape is provided with the slope. FIG. 14A illustrates the analysis results of the comparison example C1 for the case in which the surface light source diameter of the LED 13 is ø10 mm, and FIG. 14B illustrates the analysis results for the example R3(Dec0.5) for the case in which the surface light source diameter of the LED 13 is ø10 mm. In FIGs. 14A and 14B, the ordinate indicates the Y-direction position on the target object 501 in mm, the abscissa indicates the X-direction position on the target object 501 in mm, and dark parallel stripes extending in the horizontal direction correspond to the signal component described above. In addition, in FIGs. 14A and 14B, a peak (illustrated by a white portion) where the light is concentrated represents the illumination intensity corresponding to the specular reflection component (or noise component), in arbitrary units (a.u.).

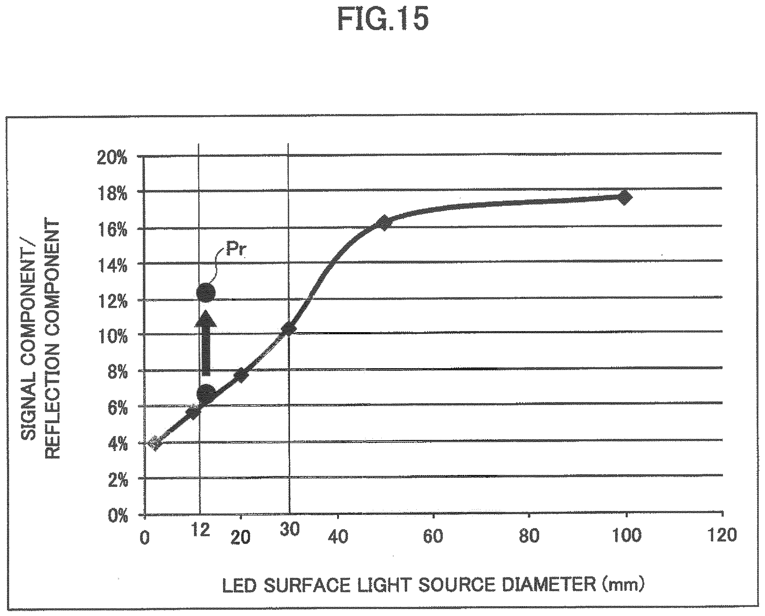

FIG. 15 is a diagram illustrating the ratio (%) between the signal component and the reflection component with respect to the LED surface light source diameter (mm), for the comparison example C1 not provided with the illuminating optical system 17. As may be seen from FIG. 15, when an attempt is made to reduce the size of the imaging device 10 by reducing the emitting surface diameter of the LED 13 (that is, the LED surface light source diameter) from ø30 mm to ø12 mm, for example, the reflection component increases with respect to the LED surface light source area in the case of the comparison example C1, and the ratio [signal component]/[reflection component] relatively decreases. Hence, it may be confirmed that reducing the size of the imaging device 10 is difficult. On the other hand, in the case of the example R3(Dec0.5), even when the LED surface light source diameter is reduced from ø30 mm to ø12 mm, for example, it may be confirmed that the increase of the reflection component with respect to the LED surface light source diameter may be suppressed, and the ratio [signal component]/[reflection component] may be improved to approximately 15% as indicated by Pr in FIG. 15. In other words, in the case of the example R3(Dec0.5), it may be confirmed that the flatness of the illumination intensity distribution in the outgoing path of light from the illuminating optical system 17 to the target object 501 may be improved even when the size of the imaging device 10 is reduced, and that the effects of the specular reflection may be suppressed.

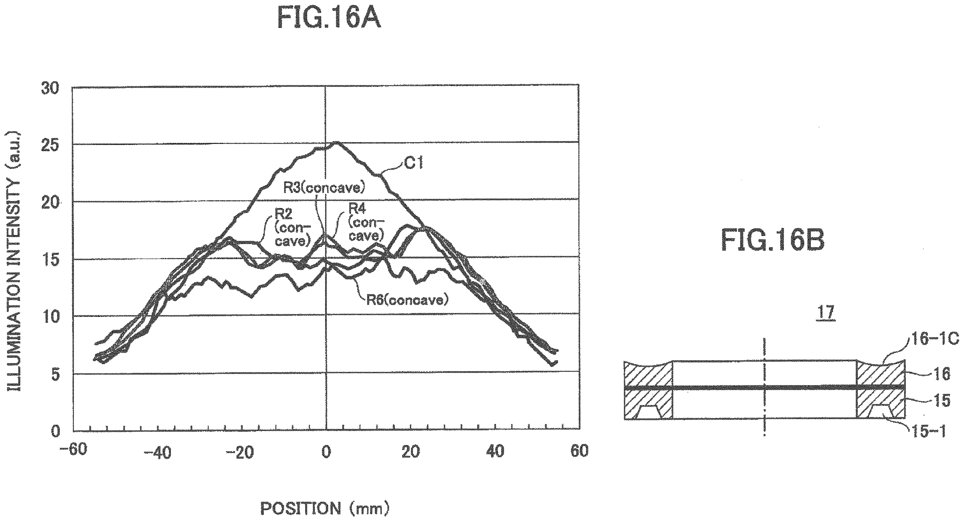

Next, a description will be given of a dependence of the illumination intensity distribution in the outgoing path of light from the illuminating optical system to the target object, with respect to the radius R and the slope of the emitting surface 16-1D having the concave shape, by referring to FIGs. 16A through 17B.

FIGs. 16A and 16B are diagrams for explaining the dependence of the illumination intensity distribution in the outward path of light from the illuminating optical system to the target object, with respect to the radius of the emitting surface having the concave shape. FIG. 16A illustrates the illumination intensity (a.u.) in the outgoing path of light to the target object 501 at each X-direction position (mm) on the target object 501, for the comparison example C1 not provided with the illuminating optical system 17, and examples R6(concave), R4(Concave), R3(concave), and R2(concave) in which the radius R of the concave shape of the emitting surface 16-1C in FIG. 16B is 6 mm, 4 mm, 3 mm, and 2 mm, respectively.

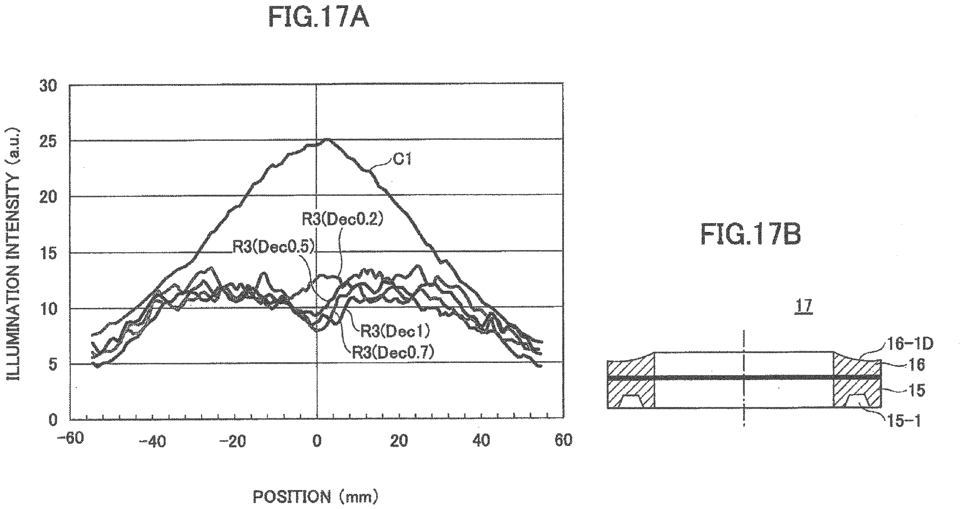

FIGs. 17A and 17B are diagrams for explaining a dependence of the illumination intensity distribution in the outward path of light from the illuminating optical system to the target object, with respect to an inclination of the emitting surface having the concave shape. FIG. 17A illustrates the illumination intensity (a.u.) in the outgoing path of light to the target object 501 at each X-direction position (mm) on the target object 501, for the comparison example C1 not provided with the illuminating optical system 17, examples R3(Dec0.2), R3(Dec0.5), R3(Dec0.7), and R3(Dec1) in which the radius R of the concave shape of the emitting surface 16-1D in FIG. 17B is 3 mm, and the center position of the radius R is decentered in the X-direction by 0.2 mm, 0.5 mm, 0.7 mm, and 1 mm, respectively, on the right side so that the concave shape is provided with the slope. In the examples R3(Dec0.2), R3(Dec0.5), R3(Dec0.7), and R3(Dec1), the concave shape slopes in the downward direction towards the outer side, and the example R3(Dec1) has the largest sloping angle (or inclination angle) amongst the examples R3(Dec0.2), R3(Dec0.5), R3(Dec0.7), and R3(Dec1).

In this embodiment, the illuminating optical element 17 has the ring shape, and for example, a ring width in a radial direction thereof is 2 mm, and an outer diameter is ø12 mm. In this case, the radius R of the concave-shaped emitting surface 16-1C and 16-1D may preferably be greater than 1 mm which is 1/2 the ring width, and may preferably be smaller than 6 mm which is approximately three times the ring width. As may be seen from FIG. 16A, the radius R in this example may preferably be 3 mm, for example. The concave shape of the emitting surfaces 16-1C and 16-1D becomes closer to a flat surface (or flat shape) as the radius R becomes large, and becomes closer to the flat surface when the radius R becomes smaller than 1/2 the ring width, to thereby deteriorate the flatness of the illumination intensity distribution in the outgoing path of light from the illuminating optical system 17 to the target object 501.

In addition, as an example of a method forming the slope in the concave shape, the center position of the radius R is decentered in the above described example. As may be seen from FIG. 17A, the amount of decentering may preferably be on the order of 1/4 to 1/10 the ring width which is 2 mm, that is, on the order of 0.5 mm to approximately 0.2 mm, for example. When the amount of decentering is large and the slope of the concave shape becomes too large, the flatness of the illumination intensity distribution in the outgoing path of light from the illuminating optical system 17 to the target object 501 may deteriorate. On the other hand, when the amount of decentering is too small, the concave shape may no longer have the slope.

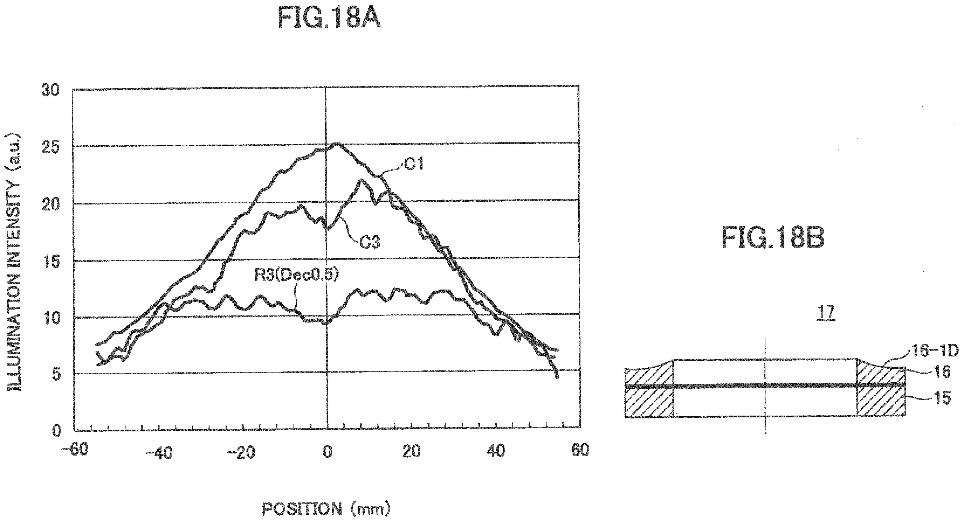

Next, a description will be given of a dependence of the illumination intensity distribution in the outgoing path of light from the illuminating optical system to the target object, with respect to the groove of the illuminating optical element, by referring to FIGs. 18A through 19B.

FIGs. 18A and 18B are diagrams for explaining a dependence of the illumination intensity distribution in the outward path of light from the illuminating optical system to the target object, with respect to the groove in the illuminating optical element. FIG. 18A illustrates the illumination intensity (a.u.) in the outgoing path of light to the target object 501 at each X-direction position (mm) on the target object 501, for the comparison example C1 not provided with the illuminating optical system 17, and the example R3(Dec0.5) in which the radius R of the concave shape of the emitting surface 16-1D in FIG. 17B is 3 mm and the center position of the radius R is decentered by 0.5 mm, and a comparison example C3 in which the radius R of the concave shape of the emitting surface 16-1D in FIG. 18B is 3 mm and the center position of the radius R is decentered by 0.5 mm but no groove 15-1 is provided in the illuminating optical system 15. It may be confirmed from FIG. 18A that the flatness of the illumination intensity distribution in the outward path of light from the illuminating optical system 17 to the target object 501 is improved when the groove 15-1 is provided in the illuminating optical system 17.

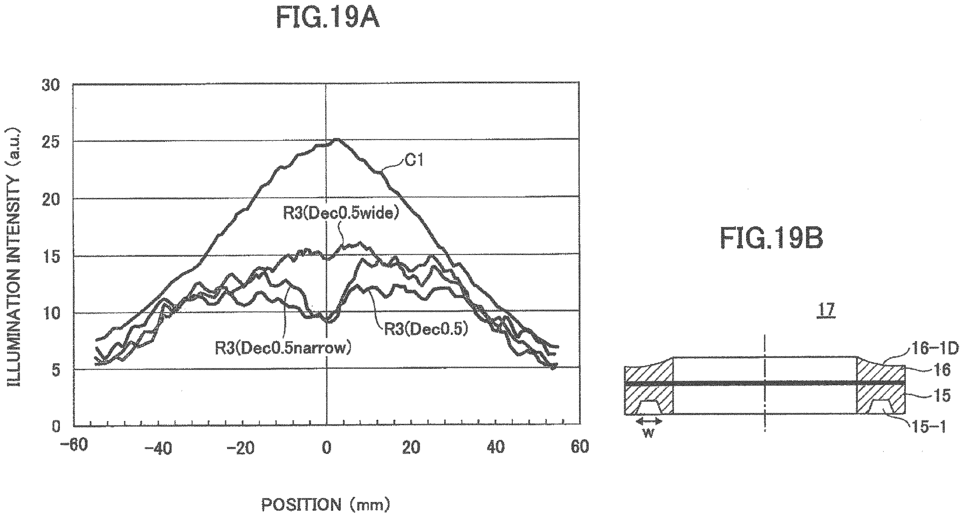

FIG. 19A illustrates the illumination intensity (a.u.) in the outgoing path of light to the target object 501 at each X-direction position (mm) on the target object 501, for the comparison example C1 not provided with the illuminating optical system 17, and the examples R3(Dec0.5narrow), R3(Dec0.5), and Re(Dec0.5wide) in which the radius R of the concave shape of the emitting surface 16-1D in FIG. 19B is 3 mm, the center position of the radius R is decentered by 0.5 mm, and the concave shape is provided with the slope. A width w of the groove 15 along the X-direction is smaller than 1/2 the ring width, equal to 1/2 the ring width, and greater than 1/2 the ring width in the examples R3(Dec0.5narrow), R3(Dec0.5), and Re(Dec0.5wide), respectively. It may be confirmed from FIG. 19A that the flatness of the illumination intensity distribution in the outward path of light from the illuminating optical system 17 to the target object 501 is improved when the width w of the groove 15-1 is on the order of 1/2 the ring width, as in the case of the example R3(Dec0.5). In addition, it may be confirmed that, when the width w of the groove 15-1 becomes smaller than 1/2 the ring width as in the case of the example R3(Dec0.5narrow), the flatness of the illumination intensity distribution deteriorates in a manner similar to the comparison example C3 in which no groove 15-1 is provided. Moreover, it may be confirmed that, when the width w of the groove 15-1 becomes greater than 1/2 the ring width as in the case of the example R3(Dec0.5wide), a dip at a central part of the illumination intensity distribution becomes conspicuous as illustrated in FIG. 19A.

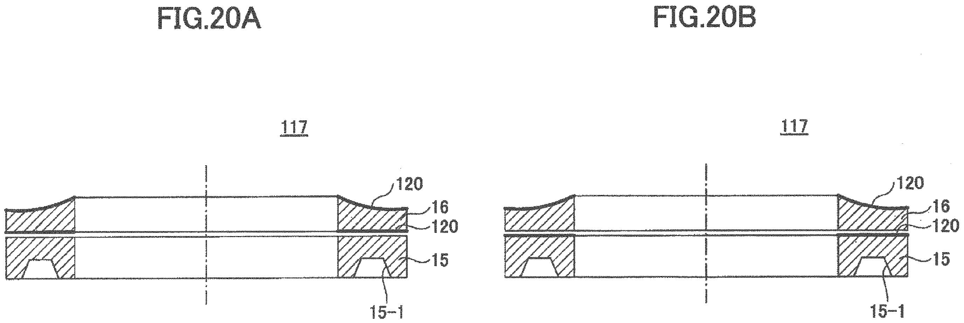

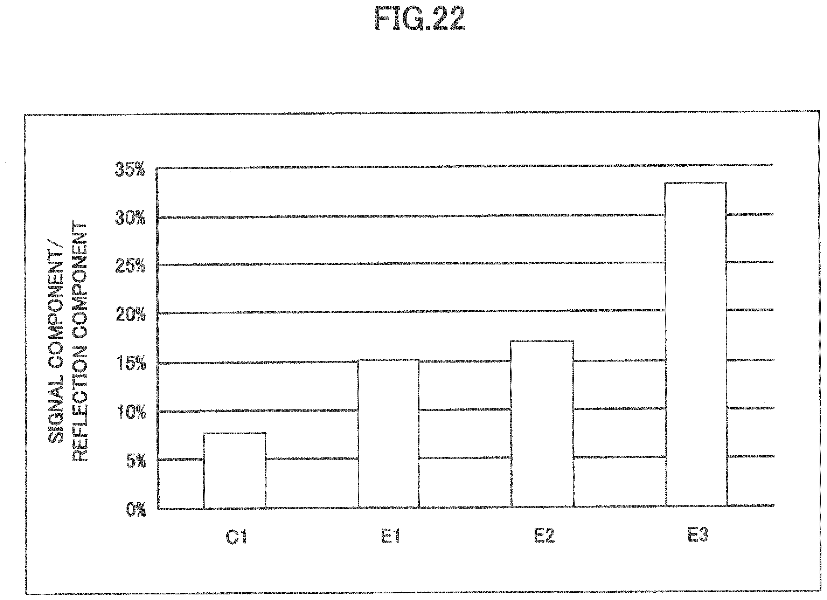

Next, a description will be given of the imaging device in a second embodiment of the present invention, by referring to FIGs. 20A through 22. FIGs. 20A and 20B are cross sectional views illustrating examples of the illuminating optical system of the imaging device in the second embodiment of the present invention. In FIGs. 20A and 22B, those parts that are the same as those corresponding parts in FIG. 17B are designated by the same reference numerals, and a description thereof will be omitted. In this embodiment, a diffusing (or scattering) surface 120 may be provided between the illuminating optical elements 15 and 16, and on the top surface of the illuminating optical element 16, that is, on the emitting surface of an illuminating optical system 117.

FIG. 20A illustrates an example in which the diffusing surface 120 is provided on the top and bottom surfaces of the illuminating optical element 16. FIG. 20B illustrates an example in which the diffusing layer 120 is provided on the top surface of the illuminating optical element 15 and on the top surface of the illuminating optical element 16. The method of forming the diffusing surface 120 is not limited to a particular method. The diffusing surface 120 may be formed by creating grains by a sandblast process (or honing process) and the like as described in "http://www.nihon-etching.co.jp/ shibo/html", or by diffusing particles having different refractive indexes into the illuminating optical element as described in Japanese Laid-Open Patent Publication No. 2002-159901, or by forming an anisotropic diffusing film on the surface of the illuminating optical element as described in "http://www.colorants-retail.com/jushi/jushi_008/ 391.html".

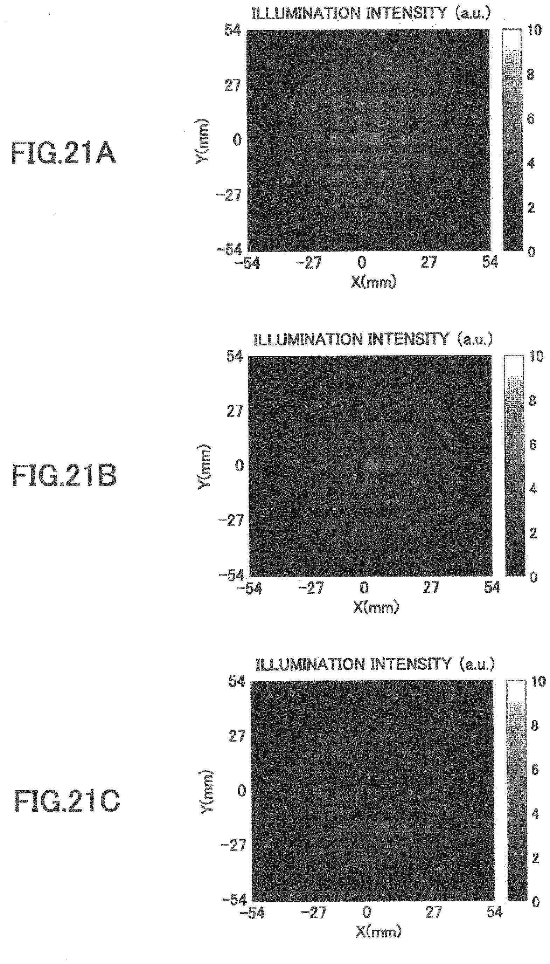

FIGs. 21A, 21B, and 21C are diagrams for explaining analysis results of the effects of the specular reflection with respect to the comparison example C1 and examples E1, E2, and E3, respectively. The example E1 corresponds to the example R(Dec0.5) described above in which the emitting surface of the illuminating optical system 17 has the concave shape with the radius R of 3 mm, the center position of the radius R is decentered in the X-direction by 0.5 mm, and the concave shape is provided with the slope, but no diffusing surface 120 is provided. The example E2 corresponds to the examiner R(Dec0.5), and has the diffusing surface 120 provided on the top surface of the illuminating optical element 15. The examiner E3 corresponds to the examiner R(Dec0.5), and has the diffusing surface 120 provided on the top surface of the illuminating optical element 15 and on the top surface of the illuminating optical element 16. In FIGs. 21A through 21C, the ordinate indicates the Y-direction position on the target object 501 in mm, and the abscissa indicates the X-direction position on the target object 501 in mm, and dark parallel stripes extending in the horizontal direction correspond to the signal component described above. In FIGs. 21A through 21C, peaks (illustrated by white portions) where the light is concentrated represent the illumination intensity corresponding to the specular reflection component (or noise component), in arbitrary units (a.u.).

FIG. 22 is a diagram illustrating the ratio (%) of the signal component and the reflection component in the comparison example C1 and the examples E1, E2, and E3. As may be seen from FIG. 22, the ratio [signal component]/[reflection component] becomes larger for the comparison example C1 and the examples E1, E2, and E3 in this order, and the effects of the specular reflection may be suppressed by the provision of the diffusing layer 120. In other words, in the case of the comparison example C1, the ratio [signal component]/[reflection component] relatively decreases to approximately 6%, and reducing the size of the imaging device 10 may be difficult. On the other hand, it may be confirmed that the ratio [signal component]/[reflection component] improves to approximately 15% for the example E1, to approximately 17% for the examiner E2, and to approximately 34% for the example E3. In other words, even when the size of the imaging device 10 is reduced in the case of the example E1, E2, and E3, the flatness of the illumination intensity distribution in the outgoing path of light from the illuminating optical system 17 to the target object 501 may be improved, and the effects of the specular reflection may be suppressed. It may also be confirmed that particularly the example E3 is preferable.

Accordingly, in order to uniformly emit light from the entire emitting surface of the illuminating optical system 17, it may be effective to diffuse the light from the LED 13 in various angles by the diffusing surface 120. For this reason, the illuminating light may illuminate the target object 501 from various angles by providing the diffusing surface 120 between the illuminating optical elements 15 and 16 and also on the emitting surface, and the effects of the specular reflection may be suppressed.

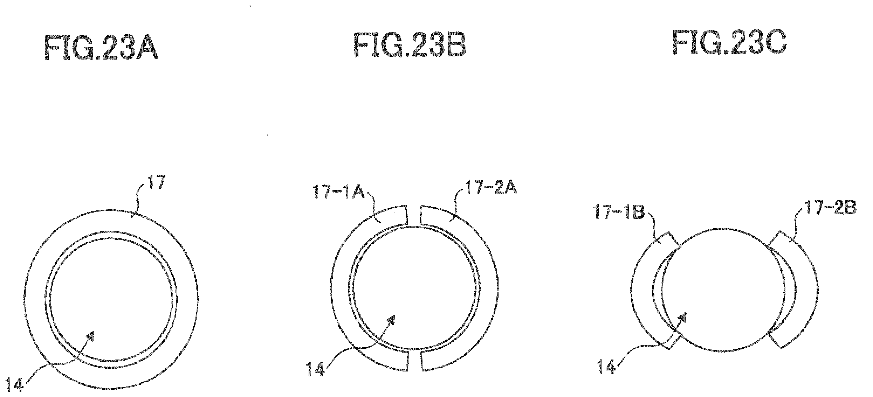

Next, a description will be given of the imaging device in a third embodiment of the present invention, by referring to FIGs. 23A, 23B, and 23C. In each of the embodiments described above, the illuminating optical system 17 provided in the periphery of the imaging optical system 14 has the ring shape. In other words, the illuminating optical elements 15 and 16 provided in the periphery of the imaging optical system 14 have the ring shape. However, the shape of the illuminating optical system 17 is not limited to the ring shape, and may be formed by a plurality of arcuate members. FIGs. 23A, 23B, and 23C are plan views illustrating parts of the imaging device in the third embodiment of the present invention. In FIGs. 23A through 23C, those parts that are the same as those corresponding parts in FIG. 1 are designated by the same reference numerals, and a description thereof will be omitted.

FIG. 23A illustrates a case in which the illuminating optical system 17 has the ring shape. FIG. 23B illustrates a case in which the illuminating optical system 17 is formed by two arcuate members 17-1A and 17-2A approximately surrounding the imaging optical system 14. FIG. 23C illustrates a case in which the illuminating optical system 17 is formed by two arcuate members 17-1B and 17-2B, that are shorter than the arcuate members 17-1A and 17-2A, approximately surrounding the imaging optical system 14. Each of the arcuate members 17-1A, 17-2A, 17-1B, and 17-2B may be arranged on one or a plurality of LEDs 13 (not illustrated). The ring shape of the illuminating optical system 17 illustrated in FIG. 23A and the inner peripheral shape of the arcuate members 17-1A and 17-2A illustrated in FIG. 23B approximately match the outer peripheral shape of the imaging optical system 14. On the other hand, the inner peripheral shape of the arcuate members 17-1B and 17-2B slightly differs from the outer peripheral shape of the imaging optical system 14. Of course, the number of arcuate members forming the illuminating optical system 17 is not limited to two, and three or more arcuate members may be provided. The number of segments into which the illuminating optical system 17 is segmented, and the shape of each of the segments forming the illuminating optical system 17 may be suitably selected in order to illuminate the target object 501 by the illuminating light from various angles.

In each of the embodiments described above, the illuminating optical elements 15 and 16 forming the illuminating optical system 17 are bonded (or made to make contiguous contact) without forming a gap between the illuminating optical elements 15 and 16. However, a slight gap (that is, an air film) on the order of 0.1 mm may be formed between the illuminating optical elements 15 and 16. In addition, the illuminating optical elements 15 and 16 may be bonded via the diffusing surface 120, as in the case of the second embodiment.

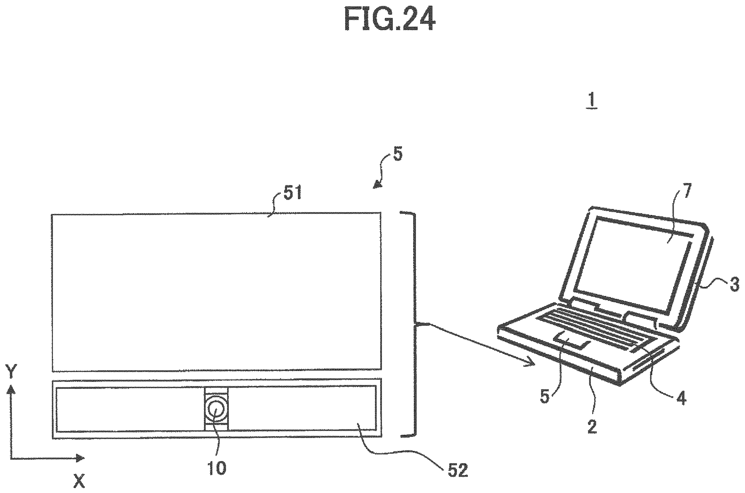

Next, a description will be given of an example of an electronic apparatus mounted with the imaging device, by referring to FIG. 24. FIG. 24 is a diagram illustrating the example of the electronic apparatus. In this example, the electronic apparatus may be a portable electronic apparatus, such as a laptop personal computer.

An electronic apparatus 1 illustrated in FIG. 24 is formed by a PC (Personal Computer), for example. The electronic apparatus 1 includes a main body 2 that accommodates a processor such as a CPU (Central Processing Unit), a lid 3 that may open and close with respect to the main body 2, a keyboard 4 and an input unit 5 provided on the main body 2, a display unit 7 provided on the lid 3, a storage unit (or memory, not illustrated), and the like.

The left side of FIG. 24 illustrates an enlarged plan view of the input unit 5 in a perspective view of the electronic apparatus 1 illustrated on the right side of FIG. 24. The input unit 5 may include a mouse pad 51, a pair of bar-shaped click pads 52, and the imaging device 10 having the configuration of any of the first through third embodiments described above. The click pads 52 may be arranged linearly so that the imaging device 10 is sandwiched between the click pads 52 along a longitudinal direction of the click pads 52. The imaging device 10 may be mounted within a relatively narrow space between the click pads 52.

Although the imaging device 10 may have a relatively small size and a relatively low cost, the imaging device 10 may reduce the specular reflection in the manner described above in order to prevent deterioration of the signal component. Accordingly, in a case in which the electronic apparatus 1 performs a known personal authentication by authenticating the biometric feature, for example, the imaging device 10 may be used to accurately pickup the biometric information, such as the pattern of the blood vessels (or veins) on the user's hand, finger, and the like, to thereby improve the authentication accuracy. In other words, the imaging device 10 may reduce the effects of the specular reflection component from the surface of the target object 501, and prevent the deterioration of the signal component used for the authentication, for example, using the configuration having a relatively low cost and a relatively small size.

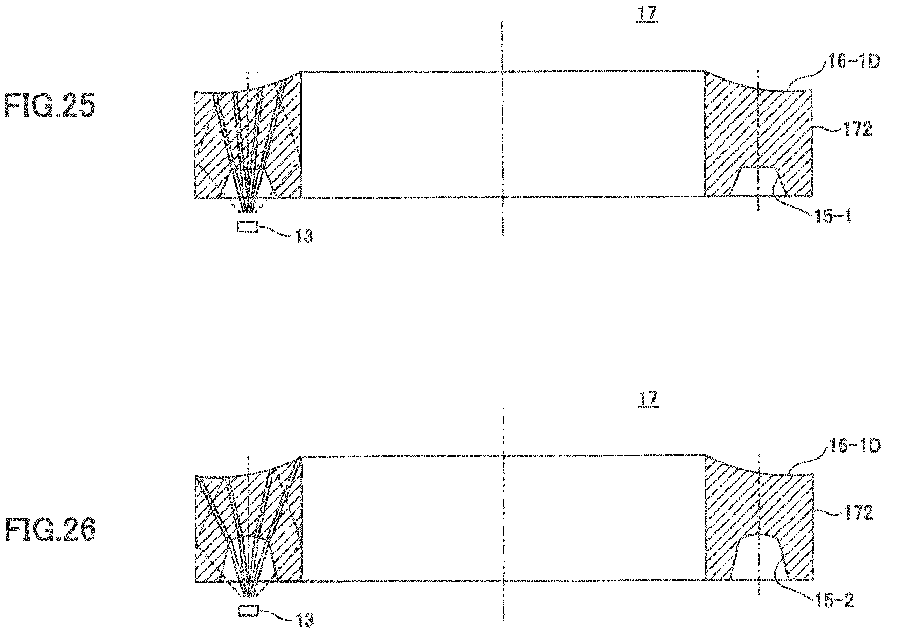

Next, a description will be given of the imaging device in a fourth example, by referring to FIG. 25. FIG. 25 is a cross sectional view illustrating an example of the illuminating optical system of the imaging device in the fourth embodiment of the present invention. In FIG. 25, those parts that are the same as those corresponding parts in FIG. 17B are designated by the same reference numerals, and a description thereof will be omitted. In this embodiment, the illuminating optical system 17 (or illuminating optical part or component) may be formed by a single illuminating optical element 172. The illuminating optical element 172 may be formed by a material similar to the material forming the illuminating optical elements 15 and 16 in each of the embodiments described above. Other parts of the illuminating optical system 17 may be formed in a manner similar to any of the first through third embodiments described above.

Next, a description will be given of the imaging device in a fifth embodiment of the present invention, by referring to FIG. 26. FIG. 26 is a cross sectional view illustrating an example of the illuminating optical system of the imaging device in the fifth embodiment of the present invention. In FIG. 26, those parts that are the same as those corresponding parts in FIG. 25 are designated by the same reference numerals, and a description thereof
will be omitted. In the illuminating optical element 172 illustrated in FIG. 25, the top part of the groove 15-1 is flat. On the other hand, in this embodiment, a top edge of a groove 15-2 of the illuminating optical element 172 has an arcuate shape. A width of the groove 15-2 is approximately 1/2 the width of the illuminating optical element 172, that is, 1/2 the difference between the inner diameter and the outer diameter of the light guide. A depth of the groove 15-2 is greater than a radius of curvature of the top edge of the groove 15-2. The distribution of light from the LED 13 may be controlled by a central part (that is, the top edge of the arcuate shape) of the groove 15-2, that functions as a light control surface. On the other hand, the light from the LED 13 is guided in the upward direction while being diffused by a peripheral part of the groove 15-2, that functions as the light guide. For this reason, compared to the illuminating optical element 172 illustrated in FIG. 25 in which the top edge of the groove 15-1 is flat, the illuminating optical element 172 illustrated in FIG. 26 may diffuse light from the LED 13 in a manner that is even more preferable. In FIGs. 25 and 26, the position of the LED 13 is illustrated outside the grooves 15-1 and 15-2, however, as may be readily understood from the description of the first embodiment and the like, at least a part of the LED 13 may be accommodated within the grooves 15-1 and 15-2.

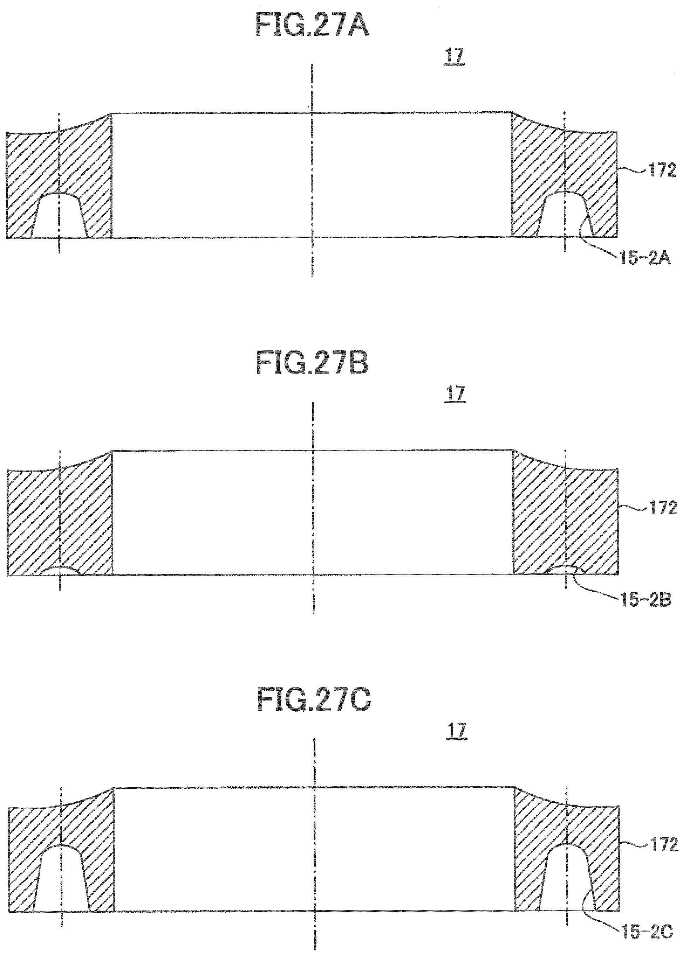

FIGs. 27A, 27B, and 27C are cross sectional views illustrating illuminating optical systems having grooves with different depths. In FIGs. 27A through 27C, those parts that are the same as those corresponding parts in FIG. 26 are designated by the same reference numerals, and a description thereof will be omitted. It is assumed that the illuminating optical element 172 has an outer diameter of 12 mm, a width of 2 mm, and a thickness of 3 mm. FIG. 27A illustrates the illuminating optical element 172 having a groove 15-2A with a width that is 1.2 mm at the bottom edge and 0.8 mm at the top edge, and a depth that is greater than a radius of curvature of the top edge and less than or equal to 1/2 the thickness of the illuminating optical element 172. FIG. 27B illustrates the illuminating optical element 172 having a groove 15-2B with a depth that is less than or equal to the radius of curvature of the top edge and shallow to such an extent that there is virtually no difference between the curved surface part of the top edge and the flat part of the side edge. FIG. 27C illustrates the illuminating optical element 172 having a groove 15-2C with a depth that exceeds 1/2 the thickness of the illuminating optical element 172 and deep, and in which other dimensions are the same as those of the groove 15-2A.

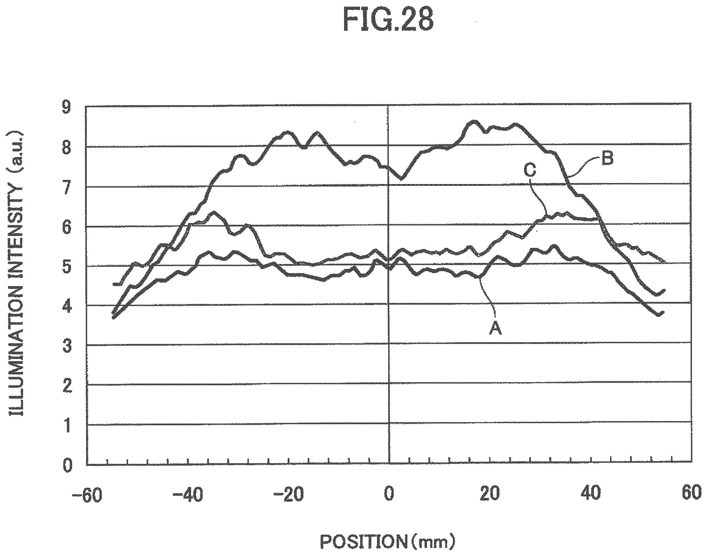

FIG. 28 is a diagram illustrating the illumination intensity of the illuminating optical systems of FIGs. 27A, 27B, and 27C in the outward path of light to the target object 501 at each X-direction position on the target object 501. FIG. 28 illustrates the illumination intensity for a case in which the distance between the LED surface light source and the target object 501 is 50 mm. In FIG. 28, A, B, and C indicate the illumination intensity for cases in which the illuminating optical element 172 having the grooves 15-2A, 15-2B, and 15-2C illustrated in FIGs. 27A, 27B, and 27C are used, respectively. As may be seen from FIG. 28, compared to the illumination intensity distribution A for the groove 15-2A, the flatness of the illumination intensity distribution B for the groove 15-2B is deteriorated because the depth of the groove 15-2B is less than or equal to the radius of curvature of the top edge and is too shallow, and the flatness of the illumination intensity distribution C for the groove 15-2C is deteriorated because the depth of the groove 15-2C exceeds the thickness of the illuminating optical element 172 and is too deep. Accordingly, it may be confirmed that the depth of the groove 15-2 of the illuminating optical element 172 is preferably less than or equal to the thickness of the illuminating optical element 172 and greater than the radius of curvature of the top edge of the groove 15-2.

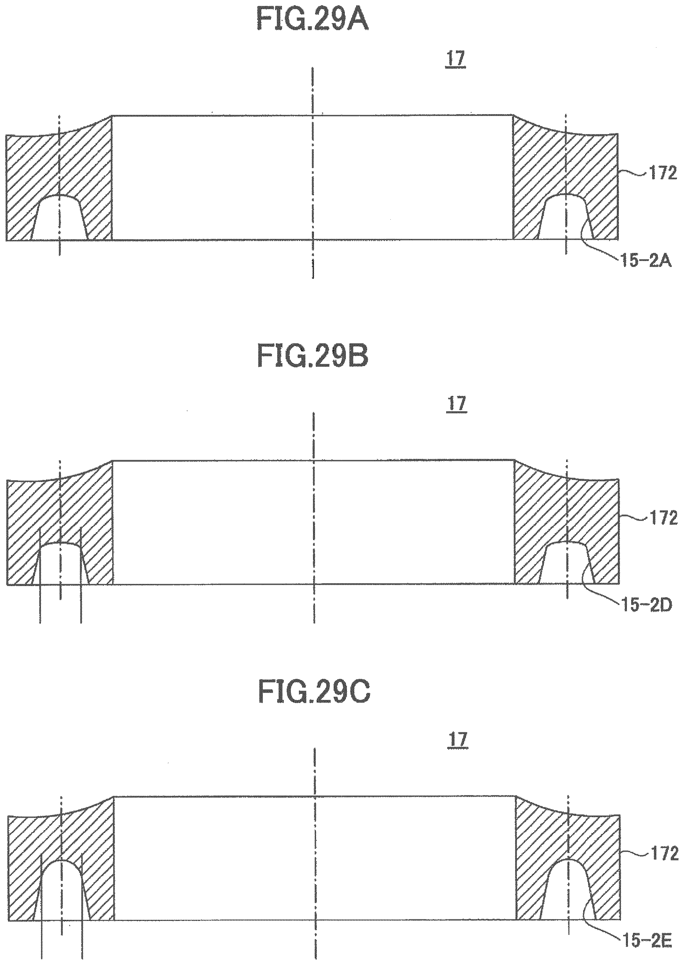

FIGs. 29A, 29B, and 29C are cross sectional views illustrating illuminating optical systems having grooves with different curvatures. In FIGs. 29A through 29C, those parts that are the same as those corresponding parts in FIG. 26 are designated by the same reference numerals, and a description thereof will be omitted. It is assumed that the illuminating optical element 172 has an outer diameter of 12 mm, a width of 2 mm, and a thickness of 3 mm. FIG. 29A illustrates the illuminating optical element 172 having the groove 15-2A with a width that is 1.2 mm at the bottom edge, 0.8 mm at the top edge, and a depth that is greater than a radius of curvature, R07 (=0.7 mm), of the top edge, and wherein the radius of curvature, R07, is smaller than the width (0.8 mm of the top edge) of the groove 15-2A and greater than or equal to the width of the groove 15-2A. FIG. 29B illustrates the illuminating optical element 172 having a groove 15-2D whose radius of curvature, R1 (= 1 mm), at the top edge is greater than or equal to the width (0.8 mm of the top edge) of the groove 15-2D, and in which other dimensions are the same as those of the groove 15-2A. FIG. 29C illustrates the illuminating optical element 172 having a groove 15-2E whose radius of curvature, R04 (= 0.4 mm), at the top edge is smaller than the width (0.8 mm of the top edge) of the groove 15-2E and is greater than or equal to 1/2 the width of the groove 15-2E, and in which other dimensions are the same as those of the groove 15-2A.

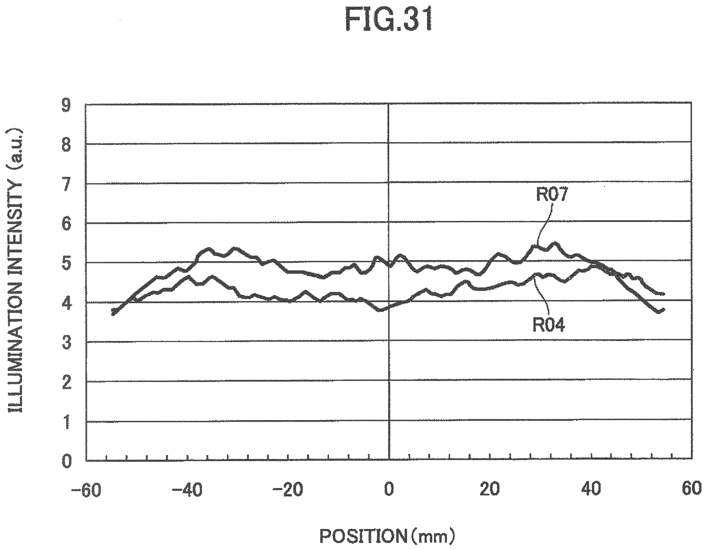

FIG. 30 is a diagram illustrating the illumination intensity of the illuminating optical systems of FIGs. 29A, 29B, and 29C in the outward path of light to the target object 501 at each X-direction position on the target object 501. It is assumed that the distance between the LED surface light source and the target object 501 is 50 mm in FIG. 30 and FIG. 31 which will be described later. In FIG. 30, R07 and R1 respectively indicate the illumination intensities (a.u.) for cases in which the illuminating optical elements 172 having the grooves 15-2A and 15-2D illustrated in FIGs. 29A and 29B are used. In addition, R2 and R3 indicate the illumination intensities (a.u.) for cases in which the radius of curvature of the top edge of the groove 15-2D is R2 (= 2 mm) and R3 (= 3 mm), respectively, as comparison examples. As may be seen from FIG. 30, compared to the illumination intensity distribution for the case in which the groove 15-2A has the radius of curvature, R07, the flatness of the illumination intensity distribution for the case in which the groove 15-2D has the radius of curvature, R1, deteriorates because the radius of curvature, R1, exceeds the width of the groove 15-2D and is too large. In addition, in the case of the comparison examples in which the groove 15-2D has the radii of curvature, R2 and R3, that are even larger than R1, the flatness of the illumination intensity distribution further deteriorates.

FIG. 31 is a diagram illustrating the illumination intensity of the illuminating optical systems of FIGs. 29A, 29B, and 29C in the outward path of light to the target object 501 at each X-direction position on the target object 501. In FIG. 31, R07 and R04 respectively indicate the illumination intensities (a.u.) for cases in which the illuminating optical elements 172 having the grooves 15-2A and 15-2E illustrated in FIGs. 29A and 29C are used. As may be seen from FIG. 31, even when compared to the illumination intensity distribution for the case in which the groove 15-2A has the radius of curvature, R07, no deterioration is observed in the flatness of the illumination intensity distribution for the case in which the groove 15-2E has the radius of curvature, R04, because the radius of curvature, R04, is smaller than the width (0.8 mm of the top edge) of the groove 15-2E and is greater than or equal to 1/2 the width of the groove 15-2E. Accordingly, it may be confirmed that the radius of curvature of the top edge of the groove 15-2 of the illuminating optical element 172 is preferably smaller than the width of the top edge of the groove 15-2, and greater than or equal to 1/2 the width of the top edge of the groove 15-2.

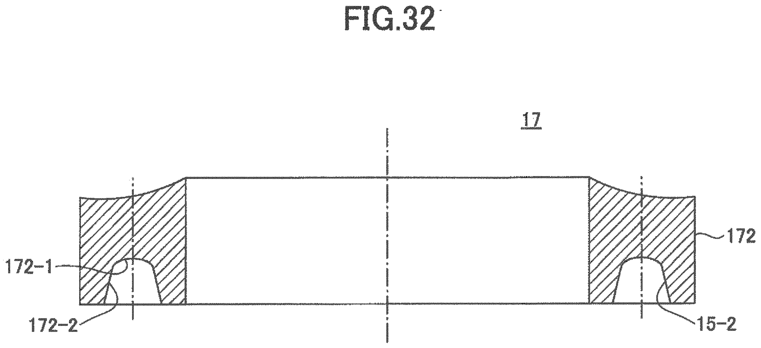

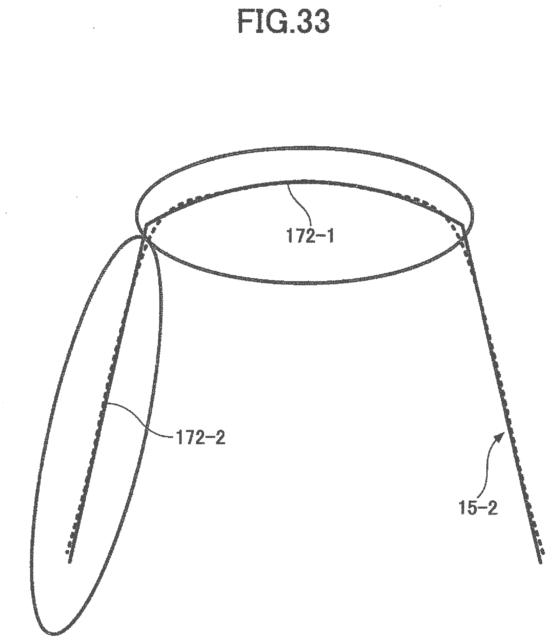

FIG. 32 is a cross sectional view illustrating an illuminating optical system having a groove formed by an arcuate top edge and a side edge with a radius of curvature that is almost infinitely large. FIG. 33 is a diagram for explaining a shape of the groove of FIG. 32. As illustrated in FIGs. 32 and 33, in the groove 15-2 of the illuminating optical element 172, the radius of curvature of an arcuate top edge 172-1 is less than or equal to the width of the top edge of the groove 15-2, and greater than or equal to 1/2 the width of the top edge of the groove 15-2. On the other hand, the radius of curvature of a side edge 172-2 of the groove 15-2 is large compared to the radius of curvature of the top edge 172-1 and is almost infinitely large, for example. Moreover, the side edge 172-2 is not parallel to the direction perpendicular to the bottom surface of the illuminating optical element 172, and is inclined. The light from the LED 13 may be guided in the upward direction while being diffused by the side edge 172-2 that is close to a flat surface and functions as the light guide, between the top edge 172-1 and the side edge 172-2 having different radii of curvature. On the other hand, the light from the LED 13 may be controlled by the top edge 172-1 that functions as the light control surface. For this reason, compared to the illuminating optical element 172 illustrated in FIG. 25 in which the top edge of the groove 15-1 is flat, the illuminating optical element 172 illustrated in FIG. 32 in which the top edge 172-1 of the groove 15-2 has the arcuate shape may diffuse the light from the LED 13 in a manner that is even more preferable.

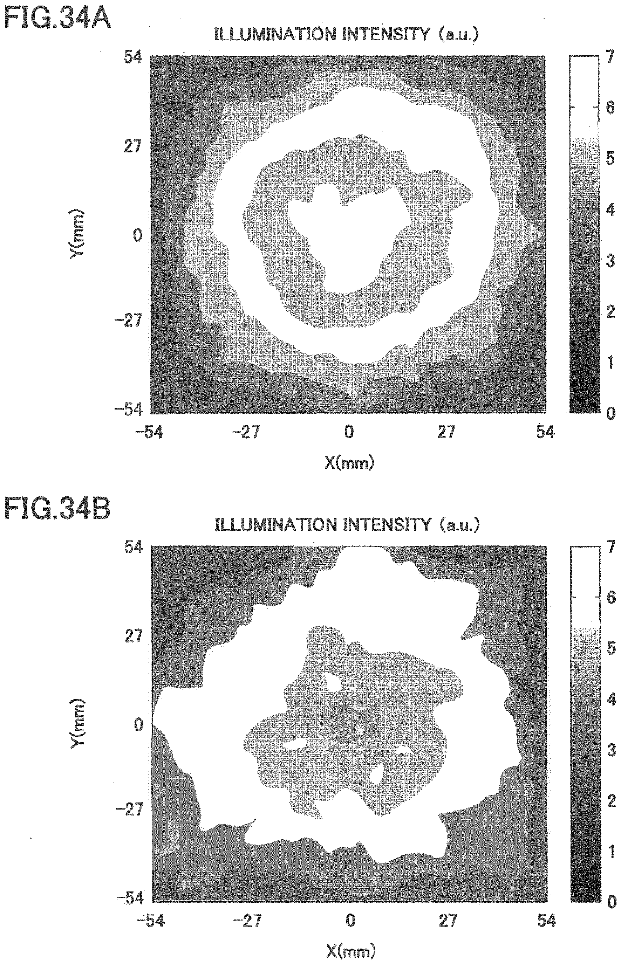

FIGs. 34A and 34B are diagrams for explaining analysis results of the outward path illumination intensity distribution with respect to the illuminating optical systems of the fourth and fifth embodiments for a case in which the distance to the target object is near. FIGs. 34A and 34B illustrate the illumination intensity distribution for cases in which the distance between the LED surface light source and the target object 501 is 50 mm. In FIGs. 34A and 34B, the ordinate indicates the Y-direction position on the target object 501 in mm, the abscissa indicates the X-direction position on the target object 501 in mm, and the illumination intensity is represented in arbitrary units (a.u.).

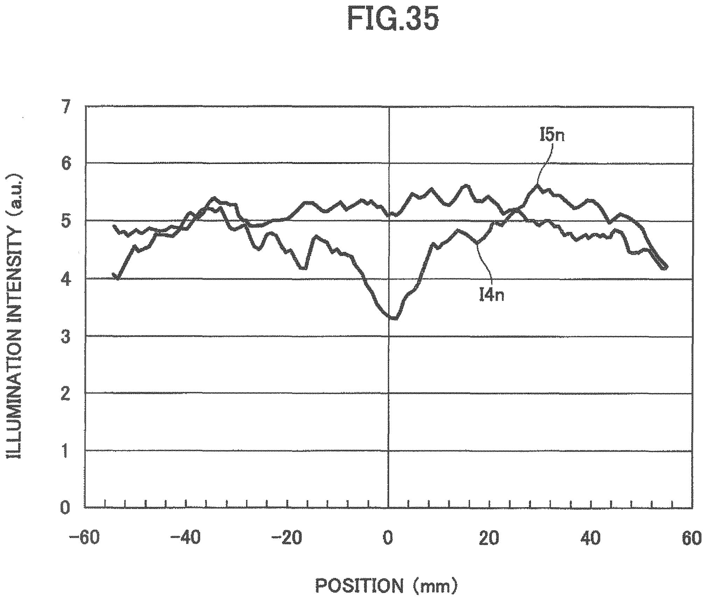

FIG. 35 is a diagram illustrating the illumination intensity of the illuminating optical system in the outward path of light to the target object at each X-direction position on the target object, in the fourth and fifth embodiments for the case in which the distance to the target object is near. In FIG. 35, I4n and I5n respectively indicate the illumination intensities (a.u.) for cases in which the illuminating optical elements 172 having the grooves 15-1 and 15-2 illustrated in FIGs. 25 and 26 are used. It may be confirmed from FIG. 35 that a decrease occurs at a central portion of the illumination intensity distribution I4n of the illuminating optical element 172, while the illumination intensity distribution I5n of the illuminating optical element 172 is approximately constant. Thus, it may be regarded that the groove 15-2 having the arcuate top edge diffuses the light in a manner that is even more preferable than the groove 15-1 having the flat top edge.

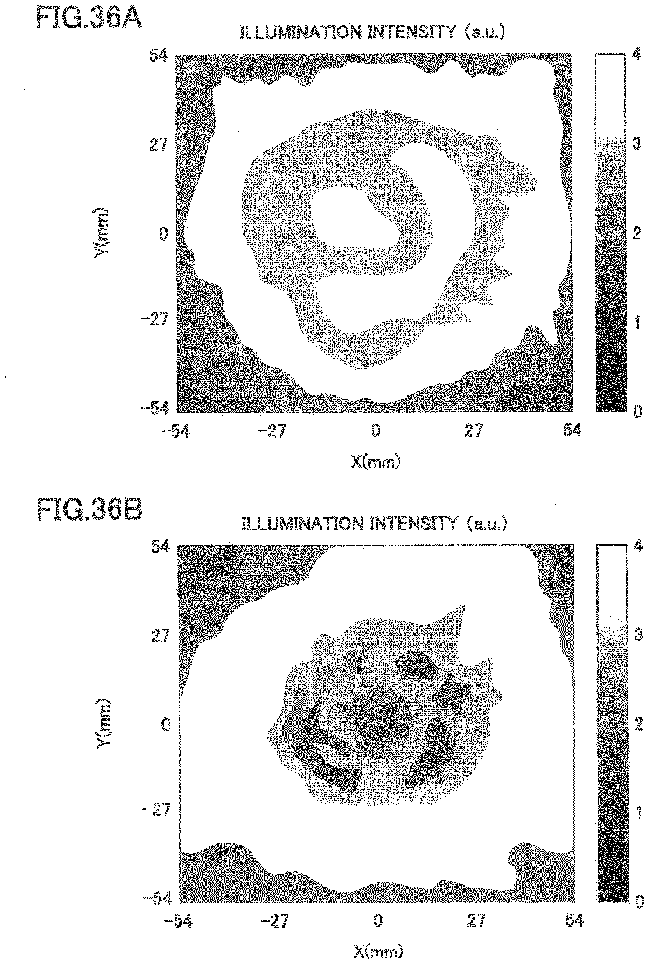

FIGs. 36A and 36B are diagrams for explaining analysis results of the outward path illumination intensity distribution with respect to the illuminating optical systems of the fourth and fifth embodiments for a case in which the distance to the target object is far. FIGs. 36A and 36B illustrate the illumination intensity distribution for cases in which the distance between the LED surface light source and the target object 501 is 100 mm. In FIGs. 36A and 36B, the ordinate indicates the Y-direction position on the target object 501 in mm, the abscissa indicates the X-direction position on the target object 501 in mm, and the illumination intensity is represented in arbitrary units (a.u.).

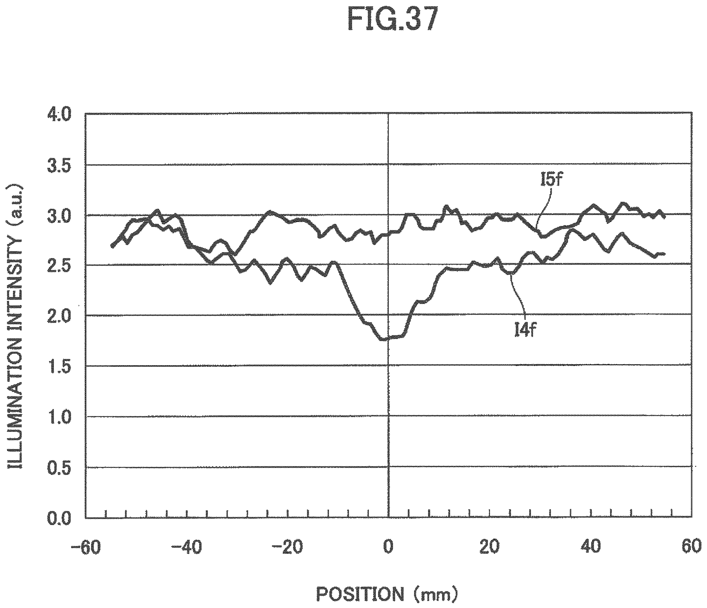

FIG. 37 is a diagram illustrating the illumination intensity of the illuminating optical system in the outward path of light to the target object at each X-direction position on the target object, in the fourth and fifth embodiments for the case in which the distance to the target object is far. In FIG. 37, I4f and I5f respectively indicate the illumination intensities (a.u.) for cases in which the illuminating optical elements 172 having the grooves 15-1 and 15-2 illustrated in FIGs. 25 and 26 are used. It may be confirmed from FIG. 37 that a decrease occurs at a central portion of the illumination intensity distribution I4f of the illuminating optical element 172, while the illumination intensity distribution I5f of the illuminating optical element 172 is approximately constant. Thus, it may be regarded that the groove 15-2 having the arcuate top edge diffuses the light in a manner that is even more preferable than the groove 15-1 having the flat top edge.

It may be confirmed that the light is diffused in a manner that is even more preferable when the top edge of the groove 15-2 of the illuminating optical element 172 has the arcuate shape, regardless of whether the distance between the LED surface light source and the target object 501 is near or far.

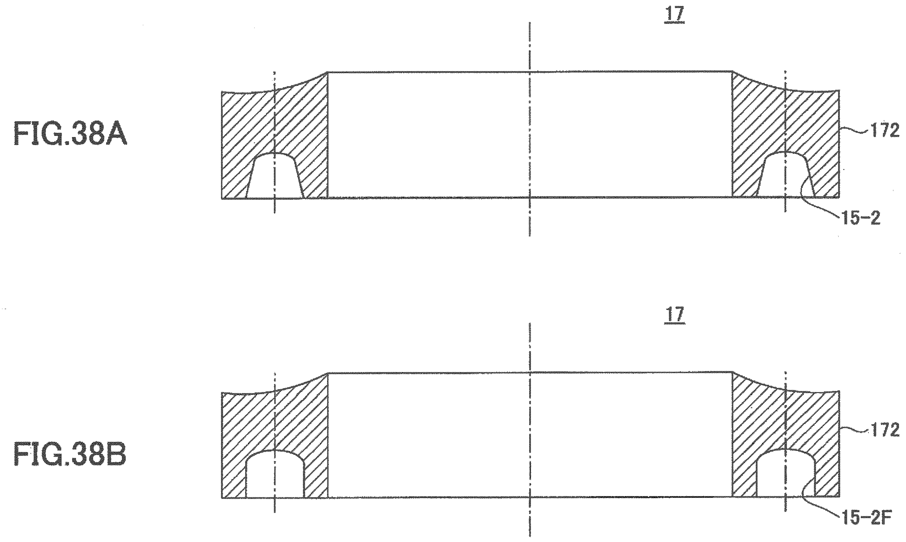

FIGs. 38A and 38B are cross sectional views illustrating examples of the illuminating optical system in the fifth embodiment and a first modification thereof. FIG. 38A illustrates the illuminating optical element 172 in the fifth embodiment in which the side edge 172-2 of the groove 15-2 is not parallel to the direction perpendicular to the bottom surface of the illuminating optical element 172, and is inclined, as illustrated in FIG. 33. FIG. 38B illustrates the first modification of the fifth embodiment in which the side edge of a groove 15-2F is parallel to the direction perpendicular to the bottom surface of the illuminating optical element 172.

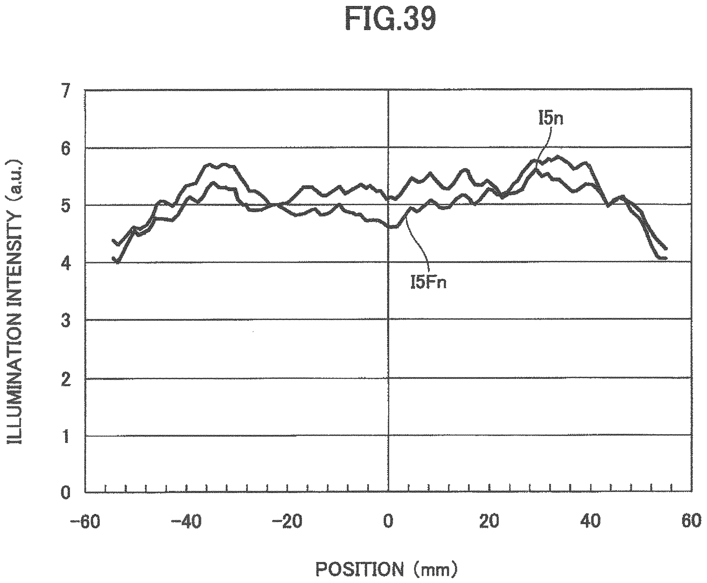

FIG. 39 is a diagram illustrating the illumination intensity of the illuminating optical system in the outward path of light to the target object at each X-direction position on the target object, in the fifth embodiment and the first modification thereof. FIG. 39 illustrates the illumination intensity distribution for case in which the distance between the LED surface light source and the target object 501 is 50 mm. In FIG. 39, I5n and I5Fn respectively indicate the illumination intensities (a.u.) for cases in which the illuminating optical elements 172 having the grooves 15-1 and 15-2F illustrated in FIGs. 38A and 38B are used. It may be confirmed from FIG. 39 that a decrease occurs at a central portion of the illumination intensity distribution I5Fn of the illuminating optical element 172, while the illumination intensity distribution I5f of the illuminating optical element 172 is approximately constant. Thus, it may be regarded that the groove 15-2 having the side edge that slopes (or spreads) outwardly in the downward direction diffuses the light in a manner that is even more preferable than the groove 15-2F having the side edge that is not inclined.

It may be confirmed that the light is diffused in a manner that is even more preferable when the side edge of the groove 15-2 of the illuminating optical element 172 is sloped outwardly in the downward direction.

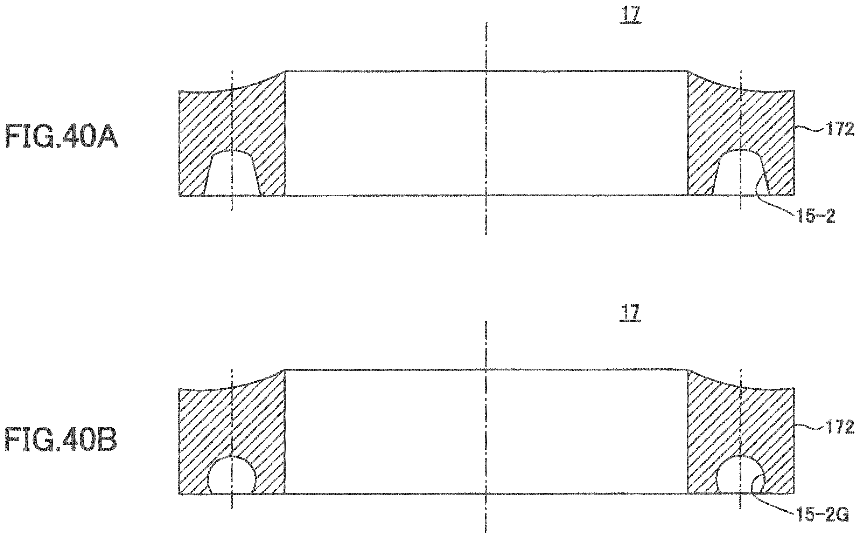

FIGs. 40A and 40B are cross sectional views illustrating examples of the illuminating optical system in the fifth embodiment and a second modification thereof. FIG. 40A illustrates the illuminating optical element 172 in the fifth embodiment in which the side edge 172-2 of the groove 15-2 is not parallel to the direction perpendicular to the bottom surface of the illuminating optical element 172, and is inclined, as illustrated in FIG. 33. FIG. 40B illustrates the second modification of the fifth embodiment in which the side edge of a groove 15-2G has a radius of curvature that is large compared to the radius of curvature of the top edge, but is small compared to the almost infinitely large radius of curvature of the side edge 172-2 of the groove 15-2.

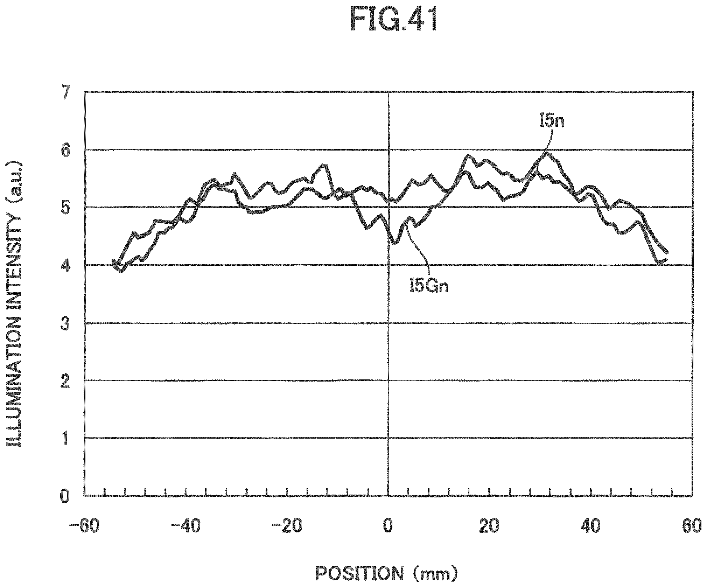

FIG. 41 is a diagram illustrating the illumination intensity of the illuminating optical system in the outward path of light to the target object at each X-direction position on the target object, in the fifth embodiment and the second modification thereof. FIG. 41 illustrates the illumination intensity distribution for case in which the distance between the LED surface light source and the target object 501 is 50 mm. In FIG. 41, I5n and I5Gn respectively indicate the illumination intensities (a.u.) for cases in which the illuminating optical elements 172 having the grooves 15-1 and 15-2G illustrated in FIGs. 40A and 40B are used. It may be confirmed from FIG. 41 that a decrease occurs at a central portion of the illumination intensity distribution I5Gn of the illuminating optical element 172, while the illumination intensity distribution I5f of the illuminating optical element 172 is approximately constant. Thus, it may be regarded that the groove 15-2 having the side edge that slopes (or spreads) outwardly in the downward direction with the radius of curvature that is almost infinitely large diffuses the light in a manner that is even more preferable than the groove 15-2G having the side edge having the radius of curvature that is small compared to the radius of curvature that is almost infinitely large.

It may be confirmed that the light is diffused in a manner that is even more preferable when the side edge of the groove 15-2 of the illuminating optical element 172 is sloped outwardly in the downward direction with the radius of curvature that is almost infinitely large.

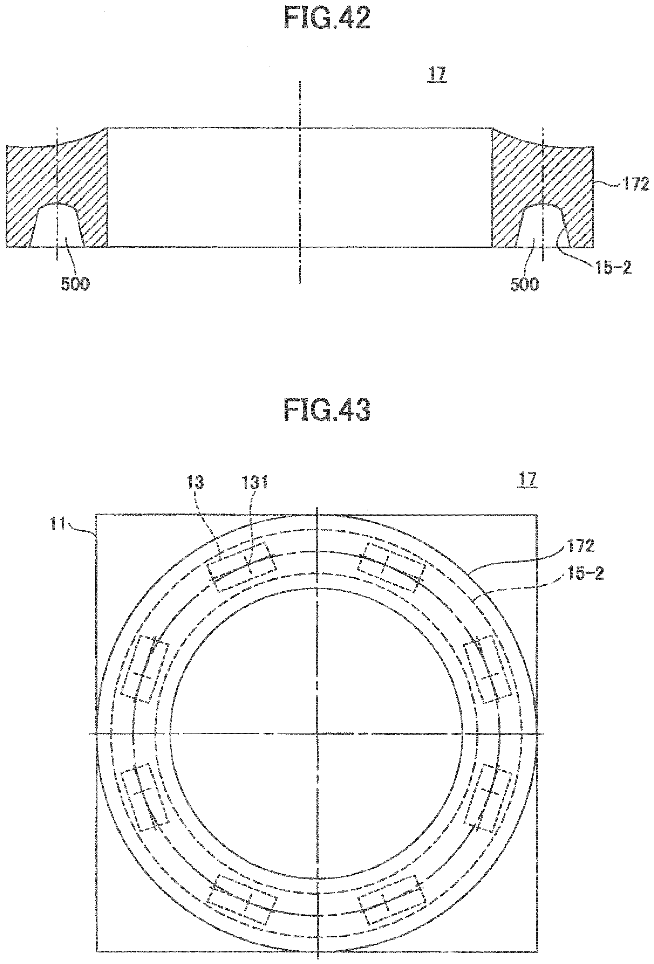

FIG. 42 is a cross sectional view illustrating an example of the illuminating optical system of the imaging device in a sixth embodiment of the present invention. In FIG. 42, those parts that are the same as those corresponding parts in FIG. 26 are designated by the same reference numerals, and a description thereof will be omitted. In this embodiment, a resin 500, that is transparent and has a refractive index lower than that of the material forming the illuminating optical element 172, may fill the groove 15-2. For example, the illuminating optical element 172 may be formed from materials such as polycarbonate having a refractive index of 1.6, PMMA (or acrylic resin) having a refractive index of 1.5, BK7 (or glass) having a refractive index of 1.5, and the like. On the other hand, the resin 500 may be silicon resin having a refractive index of 1.4, for example. By filling the inside of the groove 15-2 with the resin 500, the bottom surface of the illuminating optical system 17 may become more flat, to thereby improve the assembling accuracy and the assembling efficiency of the imaging device.

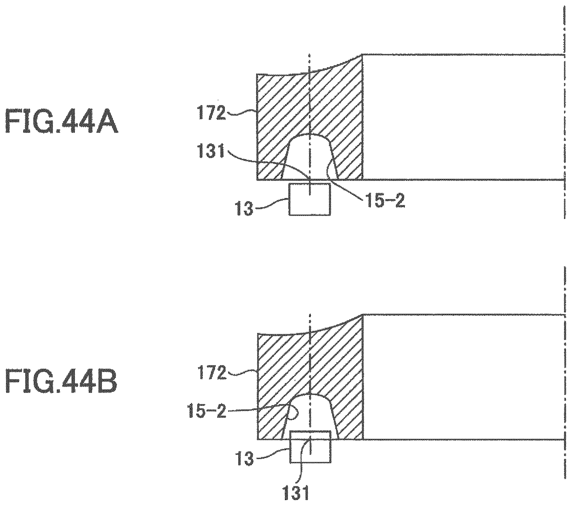

FIG. 43 is a plan view illustrating an example of the illuminating optical system of the imaging device in a seventh example. FIGs. 44A and 44B are cross sectional views illustrating a part of the illuminating optical system in the seventh embodiment on an enlarged scale. In FIGs. 43, 44A,
and 44B, those parts that are the same as those corresponding parts in FIGs. 1 and 26 are designated by the same reference numerals, and a description thereof will be omitted.

As illustrated in FIG. 43, the plurality of LEDs 13 may be arranged on the lower side of the groove 15-2 so that an optical axis (or light emission center) of each of the LEDs 13 is arranged in a vicinity of the center of the groove 15-2 in a similar manner. In this case, the LED 13 may be arranged on the lower side of the bottom surface of the illuminating optical element 172 at the lower side of the groove 15-2 as illustrated in FIG. 44A, or may be arranged so that at least a part of the LED 13 is accommodated within the grove 15-2 as illustrated in FIG. 44B.

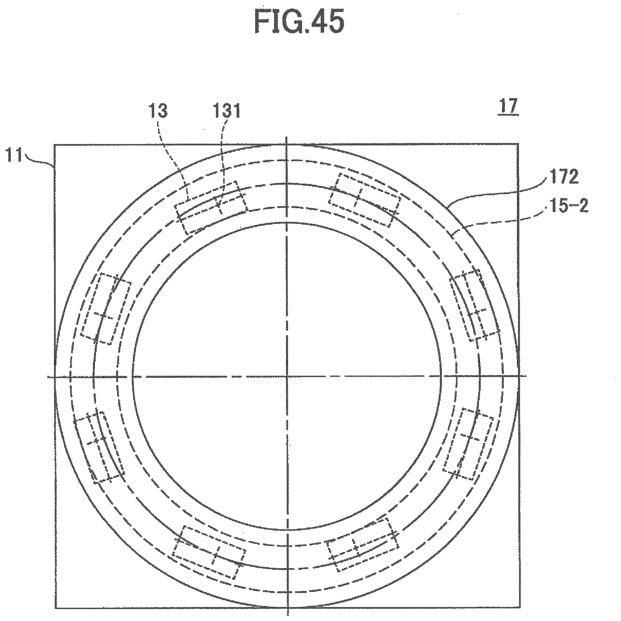

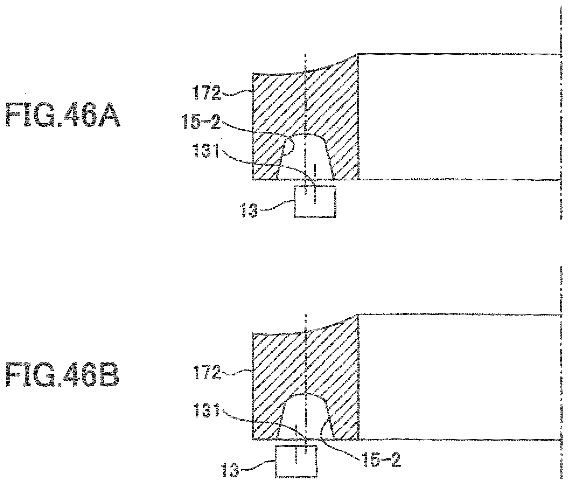

FIG. 45 is a plan view illustrating an example of the illuminating optical system of the imaging device in an eighth example . FIGs. 46A and 46B are cross sectional views illustrating a part of the illuminating optical system in the eighth example on an enlarged scale. In FIGs. 45, 46A, and 46B, those parts that are the same as those corresponding parts in FIGs. 1 and 26 are designated by the same reference numerals, and a description thereof will be omitted.

As illustrated in FIG. 45, the plurality of LEDs 13 may be arranged on the lower side of the groove 15-2 so that the optical axis (or the light emission center) of each of the LEDs 13 is arranged in a vicinity of the center of the groove 15-2 in a similar manner. However, the optical axes of the plurality of LEDs 13 are intentionally shifted in a radial direction when viewed along the circumferential direction. In this case, the optical axis of one of the LEDs 13 may be arranged
on the inner side of the center of the groove 15-2 as illustrated in FIG. 46A, while another of the LEDs 13 may be arranged on the outer side of the center of the groove 15-2 as illustrated in FIG. 46B. The arrangement of the plurality of LEDs 13 is not limited to a particular arrangement, as long as the optical axes of the plurality of LEDs 13 are arranged at different positions along the radial direction with respect to the center of the groove 15-2. By arranging the optical axes of the plurality of LEDs 13 at different radial positions with respect to the center of the groove 15-2, the light from the LEDs 13 may be diffused in an increased, variety of directions.

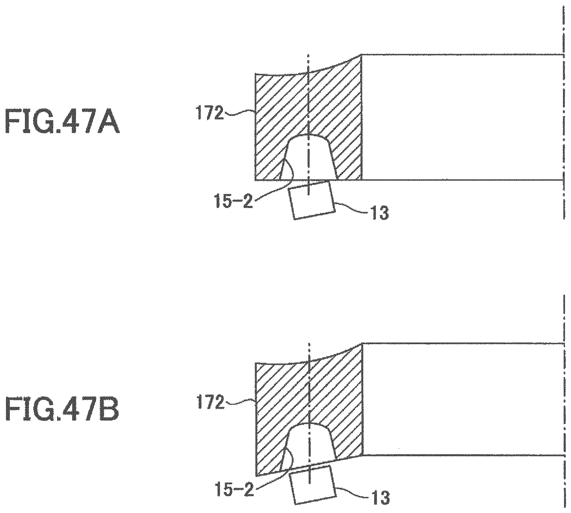

FIGs. 47A and 47B are cross sectional views illustrating a part of the
illuminating optical system in a ninth example on an enlarged scale. In FIGs. 47A and 47B, those parts that are the same as those corresponding parts in FIGs. 44A and 44B are designated by the same reference numerals, and a description thereof will be omitted. FIG. 47A illustrates an example in which the LED 13 is inclined outwards with respect to the illuminating optical element 172. FIG. 47B illustrates an example in which the LED 13 is inclined outwards with respect to the illuminating optical element 172, and the bottom surface of the illuminating optical element 172 is inclined in accordance with the inclined arrangement of the LED 13. In each of the examples illustrated in FIGs. 47A and 47B, the diffusion of light towards the outer side of the illuminating optical system 17 may be improved, because the optical axis (or light emission center) of the LED 13 is inclined with respect to the center axis of the groove 15-2. Of course, the LED 13 may be inclined inwards with respect to the illuminating optical element 172, and
in this case, the diffusion of light towards the inner side of the illuminating optical system 17 may be improved. In addition, LEDs 13 that are inclined outwards with respect to the illuminating optical element 172 and LEDs 13 that are inclined inwards with respect to the illuminating optical element 172 may coexist in the plurality of LEDs 13. In the example illustrated in FIG. 47B, an increase in the thickness of the illuminating optical system 17 cased by the inclined arrangement of the LED 13 may be suppressed compared to the example illustrated in FIG. 47A, because the bottom surface of the illuminating optical element 172 is inclined.

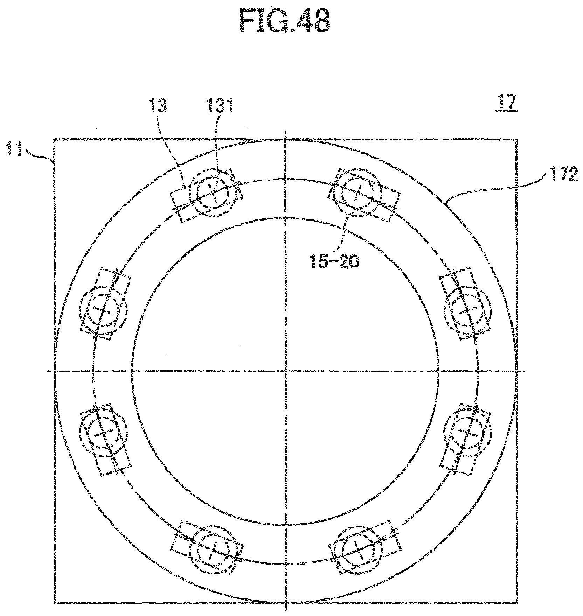

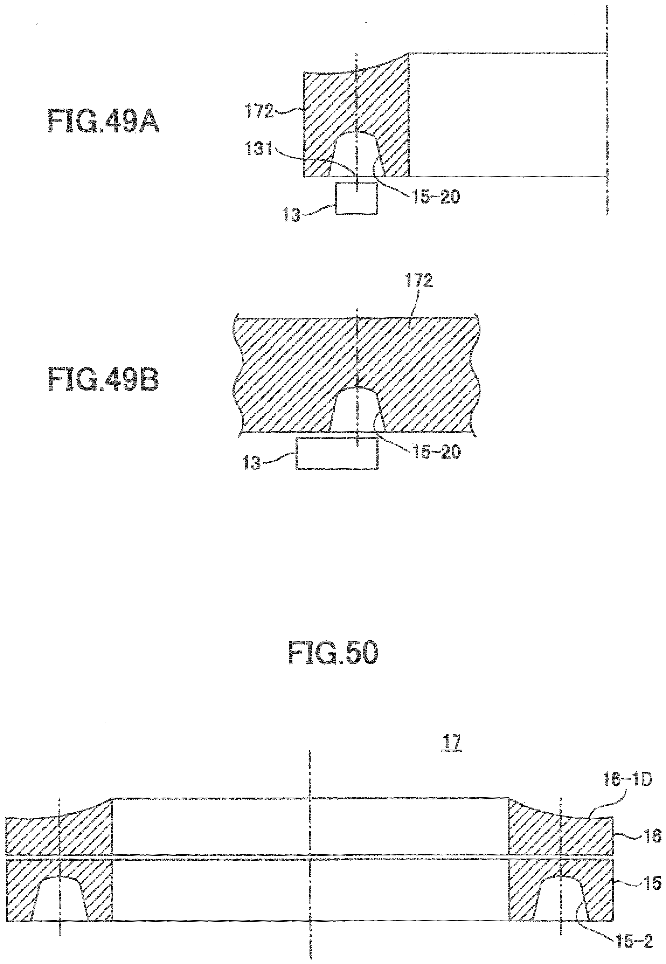

FIG. 48 is a plan view illustrating an example of the illuminating optical
system of the imaging device in a tenth example. FIGs. 49A and 49B are cross sectional views illustrating a part of the illuminating optical system in the tenth example. In FIGs. 48, 49A, and 49B, those parts that are the same as those corresponding parts in FIGs. 1 and 26 are designated by the same reference numerals, and a description thereof will be omitted.

In each of the embodiments and modifications described above, the groove width and the like of the groove of the illuminating optical system, along the radial direction, are prescribed.

ON the other hand, this embodiment also prescribes the groove width of the groove of the illuminating optical system, along the circumferential direction. FIG. 49A illustrates the cross section along the radial direction of the illuminating optical element 172, and FIG. 49B illustrates the cross section along the circumferential direction of the illuminating optical element 172. As may be seen from FIGs. 48, 49A, and 49B, a groove 15-20 of the illuminating optical element 172 may have an arcuate shape in both the circumferential direction and the radial direction, with a tip end having a truncated cone shape. Hence, the light from the LED 13 may be diffused in a manner that is preferable in both the circumferential direction and the radial direction.

FIG. 50 is a cross sectional view illustrating an example of the illuminating
optical system of the imaging device in an eleventh example. In FIG. 50 those parts that are the same as those corresponding parts in FIGs. 2C and 26 are designated by the same reference numerals, and a description thereof will be omitted. In FIG. 50, the illuminating optical system 17 may be formed by a pair of illuminating optical elements 15 and 16, and the groove 15-2 may be formed in the lower illuminating optical element 15. Otherwise, effects similar to those obtainable in the fifth embodiment and the like may
also be obtained in this example. Of course, the electronic apparatus that is mounted with the imaging device is not limited to the portable electronic apparatus, and is not limited to the computer.

In addition, two or more examples described above may be suitably combined. For example, even in a case in which the illuminating optical system (or illuminating optical part or component) is formed by a single illuminating optical element, the diffusing surface may be provided on the top surface of the illuminating optical element, that is, on the emitting surface of the illuminating optical system, as in the case of the second embodiment described above. In addition, the embodiment in which the transparent resin having the refractive index lower than that of the illuminating optical element (or light guide) fills the groove of the illuminating optical element may be combined with each of the embodiments. Similarly, the embodiment in which the groove is formed in both the circumferential direction and the radial direction may be combined with each embodiment in which the illuminating optical system is formed by a single illuminating optical element, and may be combined with each embodiment in which the illuminating optical system is formed by a pair of illuminating optical elements. Moreover, the illuminating optical system in each embodiment and each modification may be applied to the imaging device such as that illustrated in FIG. 1 and to the electronic apparatus such as that illustrated in FIG. 24.

Although the embodiments are numbered with, for example, "first," "second," ..., "tenth," or "eleventh," the ordinal numbers do not imply priorities of the embodiments. Many other variations and modifications will be apparent to those skilled in the art.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention.

## Claims

1. An imaging device comprising a plurality of light sources (13), an illuminating optical system (17) comprising a light guide (15, 16, 172) configured to reflect and diffuse light from the plurality of light sources (13) received by a first surface, and an imaging optical system (14) that is arranged on an inner side of the illuminating optical system and that is configured to receive light reflected from the target object and to pick up an image corresponding to at least a part of the target object;
the imaging device being configured such that light reflected from the target object enters a space on an inner side of the illuminating optical system (17);
wherein the illuminating optical system (17) comprises a first illuminating optical element (15) forming the first surface, and a second illuminating optical element (16) provided on the first illuminating optical element (15) and forming a second surface (16-1); and
wherein a first diffusing surface (120) is provided at the first illuminating optical element (15),
**characterized in that**:
the first surface has a groove (15-1, 15-2, 15-20) under which the plurality of light sources (13) are arranged;
the first diffusing surface (120) is provided between the first illuminating optical element (15) and the second illuminating optical element (16);
the second surface has a concave shape (16-1C, 16-1D) that is curved inwards toward the first surface (16-1); and
a second diffusing surface (120) is provided on the second surface (16-1).

2. The imaging device as claimed in claim 1, **characterized in that** the concave shape (16-1C, 16-1D) of the second surface (16-1) is inclined from a center on an inner side of the component towards an outer side of the component, and in a direction towards the first surface.

3. The imaging device as claimed in claim 1 or 2, **characterized in that** the second illuminating optical element (16) has a ring shape.

4. The imaging device as claimed in claim 1 or 2, **characterized in that** the second illuminating optical element (16) includes a plurality of arcuate members (17-1A, 17-2A, 17-1B, 17-2B).

5. The imaging device as claimed in any preceding claim, **characterized in that** there is provided:
a resin (500) filling the groove (15-1, 15-20), wherein the resin is transparent and has a refractive index lower than a refractive index of a material forming the illuminating optical system (17) .

6. The imaging device as claimed in any preceding claim, **characterized in that**:
the imaging optical system (14) has a circular cylinder shape; and
the illuminating optical system (17) has a ring shape surrounding a periphery of the imaging optical system.

7. An electronic apparatus comprising a main body (2) that accommodates a processor, **characterized in that** the main body includes the imaging device as claimed in any of claims 1 to 6.

## Patentansprüche

1. Bildgebungsvorrichtung, umfassend mehrere Lichtquellen (13), ein optisches Beleuchtungssystem (17), das einen Lichtleiter (15, 16, 172) umfasst und dazu konfiguriert ist, Licht von den mehreren Lichtquellen (13), das durch eine erste Fläche aufgenommen wird, zu reflektieren und zu streuen, und ein optisches Bildgebungssystem (14), das auf einer Innenseite des optischen Beleuchtungssystems eingerichtet ist und das dazu konfiguriert ist, Licht aufzunehmen, das von dem Zielobjekt reflektiert wird, und ein Bild zu erfassen, das mindestens einem Teil des Zielobjekts entspricht;
wobei die Bildgebungsvorrichtung derart konfiguriert ist, dass Licht, das von dem Zielobjekt reflektiert wird, in einen Raum auf einer Innenseite des optischen Beleuchtungssystems (17) eintritt;
wobei das optische Beleuchtungssystem (17) ein erstes optisches Beleuchtungselement (15), das die erste Fläche bildet, und ein zweites optisches Beleuchtungselement (16), das auf dem ersten optischen Beleuchtungselement (15) vorgesehen ist und eine zweite Fläche (16-1) bildet,
umfasst; und
wobei eine erste Streufläche (120) an dem ersten optischen Beleuchtungselement (15) vorgesehen ist;
**dadurch gekennzeichnet, dass**
die erste Fläche eine Nut (15-1, 15-2, 15-20) aufweist, unter der die mehreren Lichtquellen (13) eingerichtet sind;
die erste Streufläche (120) zwischen dem ersten optischen Beleuchtungselement (15) und dem zweiten optischen Beleuchtungselement (16) vorgesehen ist;
die zweite Fläche eine konkave Form (16-1C, 16-1D) aufweist, die nach innen zu der ersten Fläche (16-1) hin gewölbt ist; und
eine zweite Streufläche (120) auf der zweiten Fläche (16-1) vorgesehen ist.

2. Bildgebungsvorrichtung nach Anspruch 1, **dadurch gekennzeichnet, dass** die konkave Form (16-1C, 16-1D) der zweiten Fläche (16-1) von einer Mitte auf einer Innenseite der Komponente zu einer Außenseite der Komponente hin und in einer Richtung zu der ersten Fläche hin geneigt ist.

3. Bildgebungsvorrichtung nach Anspruch 1 oder 2, **dadurch gekennzeichnet, dass** das zweite optische Beleuchtungselement (16) eine Ringform aufweist.

4. Bildgebungsvorrichtung nach Anspruch 1 oder 2, **dadurch gekennzeichnet, dass** das zweite optische Beleuchtungselement (16) mehrere bogenförmige Elemente (17-1A, 17-2A, 17-1B, 17-2B) beinhaltet.

5. Bildgebungsvorrichtung nach einem vorhergehenden Anspruch, **dadurch gekennzeichnet, dass** Folgendes vorgesehen ist:
ein Kunstharz (500), das die Nut (15-1, 15-20) füllt, wobei das Kunstharz transparent ist und
einen Brechungsindex aufweist, der niedriger als der Brechungsindex eines Materials ist, das das optische Beleuchtungssystem (17) bildet.

6. Bildgebungsvorrichtung nach einem vorhergehenden Anspruch, **dadurch gekennzeichnet, dass**:
das optische Bildgebungssystem (14) eine kreisförmige Zylinderform aufweist und
das optische Beleuchtungssystem (17) eine Ringform aufweist, die einen Umfang des optischen Bildgebungssystems umgibt.

7. Elektronisches Gerät, das ein Hauptgehäuse (2) umfasst, das einen Prozessor beherbergt, **dadurch gekennzeichnet, dass** das Hauptgehäuse die Bildgebungsvorrichtung nach einem der Ansprüche 1 bis 6 beinhaltet.

## Revendications

1. Dispositif d'imagerie comprenant une pluralité de sources de lumière (13), un système optique d'éclairage (17) comprenant un guide de lumière (15, 16, 172) configuré pour réfléchir et diffuser une lumière provenant de la pluralité de sources de lumière (13) reçue par une première surface, et un système optique d'imagerie (14) qui est disposé sur un côté intérieur du système optique d'éclairage et qui est configuré pour recevoir une lumière réfléchie par l'objet cible et pour capturer une image correspondant à au moins une partie de l'objet cible ;
le dispositif d'imagerie étant configuré de telle sorte que la lumière réfléchie par l'objet cible entre dans un espace sur un côté intérieur du système optique d'éclairage (17) ;
dans lequel le système optique d'éclairage (17) comprend un premier élément optique d'éclairage (15) formant la première surface, et un second élément optique d'éclairage (16) disposé sur le premier élément optique d'éclairage (15) et formant une seconde surface (16-1) ; et
dans lequel une première surface de diffusion (120) est disposée au niveau du premier élément optique d'éclairage (15),
**caractérisé en ce que** :
la première surface a une rainure (15-1, 15-2, 15-20) sous laquelle sont disposées la pluralité de sources de lumière (13) ;
la première surface de diffusion (120) est disposée entre le premier élément optique d'éclairage (15) et le second élément optique d'éclairage (16) ;
la seconde surface a une forme concave (16-1C, 16-1D) qui est incurvée vers l'intérieur en direction de la première surface (16-1) ; et
une seconde surface de diffusion (120) est disposée sur la seconde surface (16-1).

2. Dispositif d'imagerie selon la revendication 1, **caractérisé en ce que** la forme concave (16-1C, 16-1D) de la seconde surface (16-1) est inclinée depuis un centre sur un côté intérieur du composant en direction d'un côté extérieur du composant, et dans une direction allant vers la première surface.

3. Dispositif d'imagerie selon la revendication 1 ou 2, **caractérisé en ce que** le second élément optique d'éclairage (16) a une forme d'anneau.

4. Dispositif d'imagerie selon la revendication 1 ou 2, **caractérisé en ce que** le second élément optique d'éclairage (16) comprend une pluralité d'éléments arqués (17-1A, 17-2A, 17-1B, 17-2B).

5. Dispositif d'imagerie selon l'une quelconque des revendications précédentes, **caractérisé en ce qu'**il est prévu :
une résine (500) remplissant la rainure (15-1, 15-20), la résine étant transparente et ayant un indice de réfraction inférieur à un indice de réfraction d'un matériau formant le système optique d'éclairage (17).

6. Dispositif d'imagerie selon l'une quelconque des revendications précédentes, **caractérisé en ce que** :
le système optique d'imagerie (14) a une forme de cylindre circulaire ; et
le système optique d'éclairage (17) a une forme d'anneau entourant une périphérie du système optique d'imagerie.

7. Appareil électronique comprenant un corps principal (2) qui loge un processeur, **caractérisé en ce que** le corps principal comprend le dispositif d'imagerie selon l'une quelconque des revendications 1 à 6.
